# EUROPEAN PATENT APPLICATION

(11) **EP 2 606 747 A1**
(43) Date of publication of application: **26.06.2013**
(21) Application number: 11010113.6
(22) Date of filing: 22.12.2011
(51) Int. Cl.: A23L 1/236, A23L 1/0534

(54) **Sweetness enhancer, sweetener compositions, and consumables containing the same**

(71) Applicant: Nutrinova Nutrition Specialties & Food Ingredients GmbH, 65929 Frankfurt am Main (DE)
(72) Inventor: The designation of the inventor has not yet been filed
(74) Representative: Lahrtz, Fritz

(57) **Abstract**

The present invention relates to the use of deoxycholic acid or a derivative or a stereoisomer or a salt or a hydrate thereof as a sweetness enhancer, to sweetener compositions comprising a sweetener and deoxycholic acid or a derivative or a stereoisomer or a salt or a hydrate thereof, to methods of making the sweetener compositions and to tabletop sweetener compositions comprising deoxycholic acid or a derivative or a stereoisomer or a salt or a hydrate thereof. Further, the invention relates to consumables comprising a consumable product and deoxycholic acid or a derivative or a stereoisomer or a salt or a hydrate thereof. Preferred consumable products are water-based consumables, solid dry consumables, dairy products, dairy-derived products and dairy-alternative products.

## Description

### Field of the Invention

The present invention relates to the use of deoxycholic acid or a derivative or a stereoisomer or a salt or a hydrate thereof as a sweetness enhancer, to sweetener compositions comprising a sweetener and deoxycholic acid or a derivative or a stereoisomer or a salt or a hydrate thereof, to methods of making the sweetener compositions and to tabletop sweetener compositions comprising deoxycholic acid or a derivative or a stereoisomer or a salt or a hydrate thereof. Further, the invention relates to consumables comprising a consumable product and deoxycholic acid or a derivative or a stereoisomer or a salt or a hydrate thereof. Preferred consumable products are water-based consumables, solid dry consumables, dairy products, dairy-derived products and dairy-alternative products.

### Background of the Invention

The use of non-caloric high-intensity sweeteners is increasing due to health concerns raised over childhood obesity, type II diabetes, and related illnesses. Thus, a demand exists for sweeteners having sweetnesses significantly higher than those of conventional sweeteners, such as granulated sugar (sucrose) or high-fructose corn syrup (HFCS). Many non-caloric or low-caloric sweeteners, however, are prohibitively expensive and/or contain unpleasant off-flavors and/or have unexpected and less-than-desirable sweetness profiles.

Therefore, it is of interest to enhance desired flavor sensations, e.g., sweet taste, of non-caloric or low-caloric or standard (caloric) sweeteners, conventional or otherwise.

Compounds that can enhance certain flavor sensations are of great interest and may allow not only improvement and/or intensification of the perceived flavor but also the ability to reach a certain flavor intensity using reduced concentrations of flavor ingredients. As one example, by employing an enhancer, less sweetener may be necessary to achieve a desired sweetness level, which may result in less calories and/or associated undesirable flavor notes/off-notes.

### Brief Description of the Figures

**Fig. 1** is a chart showing the results of a recombinant human taste receptor T1R2/T1R3 dependent *in vitro* cell based assay with deoxycholic acid.
**Fig. 2** is a chart showing that the selective stimulation of receptor carrying cells by deoxycholic acid is verified by measuring the time response in the cell assay over a period of 70 seconds.
**Fig. 3** is a table summarizing the results of the taste and spit assay with deoxycholic acid.

### Summary of the Invention

The present invention, in one aspect, relates to the use of deoxycholic acid or a derivative or a stereoisomer or a salt or a hydrate thereof as a sweetness enhancer.

In another aspect, the present invention relates to a sweetener composition comprising
(a) a sweetener; and
(b) deoxycholic acid or a derivative or a stereoisomer or a salt or a hydrate thereof.

Preferably, in the sweetener composition, deoxycholic acid or a derivative or a stereoisomer or a salt or a hydrate thereof is a sweetness enhancer.

In one embodiment, the sweetener composition comprises a sweetener which is selected from the group consisting of abiziasaponin, abrusosides, in particular abrusoside A, abrusoside B, abrusoside C, abrusoside D, acesulfame potassium, advantame, albiziasaponin, alitame, aspartame, superaspartame, bayunosides, in particular bayunoside 1, bayunoside 2, brazzein, bryoside, bryonoside, bryonodulcoside, carnosifloside, carrelame, curculin, cyanin, chlorogenic acid, cyclamates and its salts, cyclocaryoside I, dihydroquercetin-3-acetate, dihydroflavenol, dulcoside, gaudichaudioside, glycyrrhizin, glycyrrhetin acid, gypenoside, hematoxylin, isomogrosides, in particular iso-mogroside V, lugduname, magap, mabinlins, micraculin, mogrosides (lo han guo), in particular mogroside IV and mogroside V, monatin and its derivatives, monellin, mukurozioside, naringin dihydrochalcone (NarDHC), neohesperidin dihydrochalcone (NDHC), neotame, osladin, pentadin, periandrin I-V, perillartine, D-phenylalanine, phlomisosides, in particular phlomisoside 1, phlomisoside 2, phlomisoside 3, phlomisoside 4, phloridzin, phyllodulcin, polpodiosides, polypodoside A, pterocaryosides, rebaudiosides, in particular rebaudioside A, rebaudioside B, rebaudioside C, rebaudioside D, rebaudioside F, rebaudioside G, rebaudioside H), rubusosides, saccharin and its salts and derivatives, scandenoside, selligueanin A, siamenosides, in particular siamenoside I, stevia, steviolbioside, stevioside and other steviol glycosides, strogines, in particular strogin 1, strogin 2, strogin 4, suavioside A, suavioside B, suavioside G, suavioside H, suavioside I, suavioside J, sucralose, sucronate, sucrooctate, talin, telosmoside A₁₅, thaumatin, in particular thaumatin I and II, trans-anethol, trans-cinnamaldehyde, trilobatin, D-tryptophane, erythritol, galactitol, hydrogenated starch syrups including maltitol and sorbitol syrups, inositols, isomalt, lactitol, maltitol, mannitol, xylitol, arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, tagatose, trehalose and xylose.

Preferably, the sweetener composition comprises a first sweetener and a second sweetener.

Preferably, the sweetener is a natural sweetener.

In other embodiments, the sweetener is an artificial sweetener.

In another embodiment, the sweetener composition comprises deoxycholic acid or a derivative or a stereoisomer or a salt or a hydrate thereof in a purity of greater than about 60 % by weight, e.g., greater than about 70 % by weight, greater than about 80 % by weight, greater than about 90 % by weight, greater than about 98 % by weight, or greater than about 99 % by weight.

In one embodiment, a 1 gram portion of the sweetener composition provides sweetness comparable to from one to three teaspoons of granulated sugar, preferably comparable to two teaspoons of granulated sugar.

In one embodiment, 1 gram of the sweetener composition contains less calories and carbohydrates than about 5 grams of granulated sugar, e.g., less than about 3 grams, less than about 2 grams, or less than about 1 gram of granulated sugar.

In another embodiment, the sweetener composition further comprises at least one ingredient selected from bulking agents, carriers, fibers, sugar alcohols, flavorings, flavor enhancers, flavor stabilizers, acidulants, anti-caking and free-flow agents.

The invention, in another aspect, relates to a tabletop sweetener composition comprising
(a) at least one sugar sweetener, which is selected from the group consisting of monosaccharides, disaccharides, oligosaccharides and polysaccharides, preferably the at least one sugar sweetener is selected from the group consisting of arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, stachyose, tagatose, trehalose, xylose, and combinations thereof, most preferably the at least one sugar sweetener is a disaccharide and/or fructose;
(b) at least one sugar alcohol (or polyol), which is selected from the group consisting of erythritol, galactitol, hydrogenated starch syrups including maltitol and sorbitol syrups, inositols, isomalt, lactitol, maltitol, mannitol, xylitol, and combinations thereof, preferably the at least one sugar alcohol is erythritol;
(c) deoxycholic acid or a derivative or a stereoisomer or a salt or a hydrate thereof and
(d) a taste-improving amount of cellulose.

In preferred embodiments, in the tabletop sweetener composition the disaccharide is selected from the group consisting of isomaltulose, lactose, maltose, sucrose, and trehalose.

Preferably, the tabletop sweetener composition comprises between about 40 % by weight and about 70 % by weight sugar alcohol, in particular erythritol, in particular between about 50 % by weight and about 60 % by weight sugar alcohol, in particular erythritol, in particular about 55 % by weight sugar alcohol, in particular erythritol.

Preferably, the tabletop sweetener composition comprises between about 27 % by weight and about 50 % by weight sugar sweetener, in particular disaccharide, in particular between about 35 % by weight and about 45 % by weight sugar sweetener, in particular disaccharide, in particular between about 30 % by weight and about 40 % by weight sugar sweetener, in particular disaccharide.

Preferably, the tabletop sweetener composition comprises between about 0.5 % by weight and about 7.0 % by weight of deoxycholic acid or a derivative or a stereoisomer or a salt or a hydrate thereof, in particular between about 0.7 % by weight and 5.0 % by weight of deoxycholic acid or a derivative or a stereoisomer or a salt or a hydrate thereof, in particular between about 1.0 % by weight and about 2.5 % by weight of deoxycholic acid or a derivative or a stereoisomer or a salt or a hydrate thereof.

Preferably, the tabletop sweetener composition comprises between about 0.4 % by weight and about 3.0 % by weight cellulose, in particular between about 0.7 % by weight and about 2.0 % by weight cellulose, in particular 1.0 % by weight cellulose.

In one embodiment, the tabletop sweetener composition further comprises a sweetness modifier, in particular less than about 2 % by weight of a sweetness modifier. In terms of ranges, the tabletop sweetener composition may, for example, comprise between about 0.01 % by weight and about 2 % by weight sweetness modifier, in particular between about 0.1 % by weight and about 1.5 % by weight sweetness modifier.

In other embodiments, the tabletop sweetener composition further comprises a mouthfeel enhancer, in particular less than about 1 % by weight of a mouthfeel enhancer. In terms of ranges, the tabletop sweetener composition may, for example, comprise between about 0.01 % by weight and about 1 % by weight mouthfeel enhancer, in particular between about 0.1 % by weight and about 0.5 % by weight mouthfeel enhancer.

In other embodiments, the tabletop sweetener composition further comprises a flavoring, in particular less than about 1 % by weight of a flavoring. In terms of ranges, the tabletop sweetener composition may, for example, comprise between about 0.01 % by weight and about 1 % by weight flavoring, in particular between about 0.1 % by weight and about 0.5 % by weight flavoring.

In one embodiment, the tabletop sweetener composition substantially comprises sweetener particles.

Preferably, the sweetener particles have an average particle size of between about 50 microns and about 1250 microns, in particular the sweetener particles have an average particle size of between about 100 microns and about 1000 microns.

In one embodiment, the tabletop sweetener composition has less than about 5 calories per gram, in particular the tabletop sweetener composition has less than about 3 calories per gram, in particular the sweetener composition has less than about 1 calorie per gram.

The present invention, in another aspect, further relates to a tabletop sweetener composition comprising
(a) a plurality of first sweetener particles, wherein the first sweetener particles have (i) a sugar alcohol core, in particular an erythritol core, (ii) a first sugar alcohol core-coating layer, in particular a first erythritol core-coating layer comprising deoxycholic acid or a derivative or a stereoisomer or a salt or a hydrate thereof and cellulose, and (iii) a second sugar alcohol core-coating layer, in particular a second erythritol core-coating layer comprising a sugar sweetener, in particular a disaccharide, where the second sugar alcohol core-coating layer, in particular the second erythritol core-coating layer is disposed over the first sugar alcohol core-coating layer, in particular over the first erythritol core-coating layer; and
(b) a plurality of second sweetener particles, where the second sweetener particle has (i) a sugar sweetener core, in particular a disaccharide core, (ii) a first sugar sweetener core-coating layer, in particular a first disaccharide core-coating layer comprising deoxycholic acid or a derivative or a stereoisomer or a salt or a hydrate thereof and cellulose, and (iii) a second sugar sweetener core-coating layer, in particular a second disaccharide core-coating layer comprising a sugar sweetener, in particular a disaccharide, where the second sugar sweetener core-coating layer, in particular the second disaccharide core-coating layer is disposed over the first sugar sweetener core-coating layer, in particular over the first disaccharide core-coating layer.

In one embodiment, the tabletop sweetener composition comprises a mixture of the plurality of first sweetener particles and the plurality of second sweetener particles.

Preferably, the disaccharide core comprises isomaltulose.

In one embodiment, the second erythritol core-coating layer comprises isomaltulose.

In one embodiment, the second disaccharide core-coating layer comprises isomaltulose.

In one embodiment, at least one of the first sugar alcohol core-coating layers, in particular the first erythritol core-coating layer, and the first sugar sweetener core-coating layer, in particular the first disaccharide core-coating layer, further comprise a flavoring.

In one embodiment, at least one of the first sugar alcohol core-coating layers, in particular the first erythritol core-coating layer, and the first sugar sweetener core-coating layer, in particular the first disaccharide core-coating layer further, comprise a mouthfeel enhancer.

In one embodiment, at least one of the first sugar alcohol core-coating layers, in particular the first erythritol core-coating layer, and the first sugar sweetener core-coating layer, in particular the first disaccharide core-coating layer, further comprise a sweetness modifier.

Preferably, the plurality of first sweetener particles and the plurality of second sweetener particles have an average particle size between about 50 microns and about 1250 microns, in particular, wherein the plurality of first sweetener particles and the plurality of second sweetener particles have an average particle size between about 100 microns and about 1000 microns.

In another aspect, the present invention relates to a consumable comprising
(a) a consumable product; and
(b) a sweetener composition of the invention as defined above.

In another aspect, the present invention relates to a consumable comprising
(a) a consumable product; and
(b) a tabletop sweetener composition of the invention as defined above.

Preferably, the sweetener composition of the invention and the tabletop sweetener composition of the invention are present in the consumable in an amount effective to increase a sweetness level of the consumable.

In one embodiment of the invention, the consumable contains deoxycholic acid or a derivative or a stereoisomer or a salt or a hydrate thereof as a sweetness enhancer. In this embodiment, in the consumable of the invention deoxycholic acid or a derivative or a stereoisomer or a salt or a hydrate thereof is present in a concentration from 0.1 wppm to 100 wppm, in particular from 0.2 wppm to 50 wppm, particularly preferred from 0.5 wppm to 10 wppm.

In one embodiment, the consumable product is selected from water-based consumable products, solid dry consumable products, dairy products, dairy-derived products and dairy-alternative products.

Preferably, the consumable product is a water-based consumable product selected from the group consisting of beverage, water, aqueous beverage, enhanced/slightly sweetened water drink, flavored carbonated and still mineral and table water, non-carbonated beverage, carbonated water, still water, soft drink, non-alcoholic drink, alcoholic drink, beer, wine, liquor, fruit drink, juice, fruit juice, vegetable juice, broth drink, coffee, tea, black tea, green tea, oolong tea, herbal infusion, cacoa (water-based), tea-based drink, coffee-based drinks, cacao-based drink, dessert, syrup, frozen fruit, frozen fruit juice, water-based ice, fruit ice, sorbet, dressing, salad dressing, jams, marmalades, canned fruit, savoury, delicatessen products like delicatessen salads, sauces, ketchup, mustard, pickles and marinated fish, sauce, soup, and beverage botanical materials (whole or ground), or instant powder for reconstitution (coffee beans, ground coffee, instant coffee, cacao beans, cacao powder, instant cacao, tea leaves, instant tea powder).

Preferably, the consumable product is a solid dry consumable product selected from the group consisting of cereals, baked food products, biscuits, bread, breakfast cereal, cereal bar, energy bars/nutritional bars, granola, cakes, rice cakes, cookies, crackers, donuts, muffins, pastries, confectioneries, chewing gum, chocolate products, chocolate, fondant, candy, hard candy, marshmallow, pressed tablets, snack foods, botanical materials (whole or ground), and instant powders for reconstitution.

Preferably, the consumable product is a dairy product, dairy-derived product and/or dairy-alternative product selected from the group consisting of milk, fluid milk, cultured milk product, cultured and noncultured dairy-based drink, cultured milk product cultured with lactobacillus, yoghurt, yoghurt-based beverage, smoothy, lassi, milk shake, acidified milk, acidified milk beverage, butter milk, kefir, milk-based beverages, milk/juice blend, fermented milk beverage, icecream, dessert, sour cream, dip, salad dressing, cottage cheese, frozen yoghurt, soy milk, rice milk, soy drink, and rice milk drink.
In one embodiment, the consumable product is a carbonated drink.

In one embodiment, the consumable product is a non-carbonated drink.

In one embodiment, the consumable product is a cereal.

In one embodiment, the consumable product is yoghurt.

In one embodiment, the consumable product is a chewing-gum.

Preferably, the consumable product is a dental product selected from the group consisting of toothpaste, dental floss, mouthwash, denture adhesive, enamel whitener, fluoride treatments and oral care gels, toothpaste being particularly preferred.

Preferably, the consumable product is a cosmetic product selected from the group consisting of lipstick, lip balm, lip gloss and petroleum jelly.

Preferably, the consumable product is a pharmaceutical product selected from the group consisting of over-the-counter and prescription drugs, non-tobacco snuff, tobacco substitutes, chewable medications, cough syrups, throat sprays, throat lozenges, cough drops, antibacterial products, pill coatings, gel caplets, soluble fiber preparations, antacids, tablet cores, rapidly absorbed liquid compositions, stable foam compositions, rapidly disintegrating pharmaceutical dosage forms, beverage concentrates for medicinal purposes, aqueous pharmaceutical suspensions, liquid concentrate compositions, and stabilized sorbic acid solutions, phosphate buffers, saline solutions, emulsion, non-aqueous pharmaceutical solvents, aqueous pharmaceutical carriers, solid pharmaceutical carrier, and pharmaceutical preservatives/additives (antimicrobials, antioxidants, chelating agents, inert gases, flavoring agents, coloring agents).

In one embodiment, the consumable product is an animal feed or animal food.

The invention, in another aspect, further relates to a method of providing a consumable of the invention as defined above by admixing a sweetener composition of the invention as defined above or a tabletop sweetener composition of the invention as defined above to a consumable product.

The invention, in another aspect, further relates to a method of enhancing the taste sensations associated with flavor ingredients by admixing a sweetener composition of the invention as defined above or a tabletop sweetener composition as defined above with one or more flavor ingredients to provide a flavor-enhanced composition or consumable.

The invention, in another aspect, further relates to a method of increasing a sweetness level of a consumable having an initial sweetness level comprising the step of adding to the consumable deoxycholic acid or a derivative or a stereoisomer or a salt or a hydrate thereof in an amount effective to increase the sweetness level of the consumable to a final sweetness level.

### Detailed Description of the Invention

### Use of Deoxycholic acid or a Derivative or a Stereoisomer or a Salt or a Hydrate thereof as a Sweetness Enhancer

As indicated above, there is a need for alternative sweetness enhancers which are healthy, i.e. non-caloric, non-cariogenic and ideal for diabetics. Also, the need exists for sweetness enhancers having an excellent temperature and pH stability, excellent storage and solubility properties as well as a taste-enhancing effects and synergies when combined other sweetening compounds. In particular, novel sweetness enhancers that are derived from natural products are of great interest as they would also allow reducing levels of conventional caloric sweeteners and therefore calorie reduction at the same sweetness level. It is therefore an object of the present invention to provide an alternative sweetness enhancer having the above mentioned desired characteristics.

It has now been found that deoxycholic acid or a derivative or a stereoisomer or a salt or a hydrate thereof are useful as sweetness enhancers.

Thus, in one aspect, the invention relates to the use of deoxycholic acid or a derivative or a stereoisomer or a salt or a hydrate thereof as a sweetness enhancer.

The deoxycholic acid, in one embodiment, is a natural constituent, which may be derived from, for example, bile of man, ox, goat and sheep.

The isolation of deoxycholic acid from various species and the synthesis thereof is known. Deoxycholic acid is also commercially available.

For example, T. Reichstein *et al.* (T. Reichstein und M. Sorkin, Helvetica Chimica Acta, 1942, 25, 5, 797-805, "Über Gallensäuren und verwandte Stoffe. 12. Mitteilung. Vereinfachte präparative Herstellung reiner Desoxycholsäure und einiger ihrer Derivate"), which is incorporated by reference in its entirety, describes the synthesis of deoxycholic acid.

For example, J. Kandrac *et al.* (J. Kandrac et al., European Journal of Drug Metabolism and Pharmacokinetics, 31, 3, 157-177, "*Isolation and determination of bile acids*"), which is incorporated by reference in its entirety, describes the isolation of deoxycholic acid.

Exemplary synonyms for deoxycholic acid are (3α,5β,12α,20*R*)-3,12-dihydroxycholan-24-oic acid (IUPAC name), cholanoic acid, cholorebic acid, deoxycholate, droxolan, pyrochol and septochol.

The CAS Registry Number of deoxycholic acid is 83-44-3.

Deoxycholic acid has the chemical structure of the formula (I) 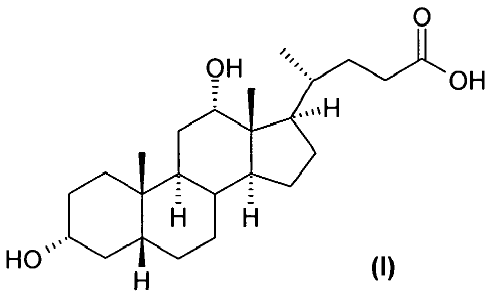
Molecular Formula: C₂₄H₄₀O₄
Molecular Weight: 392.578
Biological Source: Occurs in bile of man, ox, goat and sheep; a faecal secondary bile acid Use/Importance: Emulsifying agent used in foods. Na salt is an anionic surfactant. Used in characterisation of biomolecules
Biological Use/Importance: Choleretic, antiinflammatory agent
Physical Description: Cryst. (EtOH)
Melting Point: Mp 187-189°
Optical Rotation: [α]¹⁹_{D} +47.7 (c, 1.7 in dioxan). [α]_{D} +53 (CHCl₃)

As used herein, the term "derivative(s)" as it relates to deoxycholic acid means organic molecules that are structurally closely related to deoxycholic acid itself and that have similar characteristics and effects, preferably as sweetness enhancer. Preferred examples of derivatives of deoxycholic acid are selected from the group defined below and combinations thereof. This group of derivatives, however, is merely exemplary and is not meant to limit the scope of the invention.

Exemplary derivatives of deoxycholic acid are:
1) Derivative: **methyl ester of allodeoxycholic acid**
   Molecular Formula: C₂₅H₄₂O₄
   Molecular Weight: 406.604
   Melting Point: Mp 174-176°
   Optical Rotation: [α]²³_{D} +35.6 (c, 1 in MeOH)
2) Derivative: **methyl ester of deoxycholic acid**
   CAS Registry Number: 3245-38-3
   Molecular Formula: C₂₅H₄₂O₄
   Molecular Weight: 406.604
   Physical Description: Cryst. (butanone)
   Melting Point: Mp 105-106°
   Optical Rotation: [α]^{20.5}_{D} +48 (butanone)
   Described in: T. Reichstein und M. Sorkin, Helvetica Chimica Acta, 1942, 25, 5, 797-805, "*Über Gallensäuren und verwandte Stoffe. 12. Mitteilung. Vereinfachte präparative*
   *Herstellung reiner Desoxycholsäure und einiger ihrer Derivate*"
3) Derivative: **24-O-β-D-galactopyranosyl ester (Deoxycholic acid 24-galactoside)**
   CAS Registry Number: 821017-80-5
   Molecular Formula: C₃₀H₅₀O₉
   Molecular Weight: 554.72
   Biological Source: Constit. of human urine
   Described in: T. Goto et al., Steroids, 2005, 70, 185-192
4) Derivative: **ethyl ester of deoxycholic acid**
   Molecular Formula: C₂₆H₄₄O₄
   Molecular Weight: 420.631
   Physical Description: Needles
   Melting Point: Mp 81°
5) Derivative: **deoxycholamide**
   CAS Registry Number: 6786-08-9
   Molecular Formula: C₂₄H₄₁NO₃
   Molecular Weight: 391.593
   Physical Description: Needles
   Melting Point: Mp 186°
   Other Data: Sinters at 162°
6) Derivative: **glycine amide of deoxycholic acid**
   Synonym(s): Glycodeoxycholic acid. Deoxycholylglycine
   CAS Registry Number: 360-65-6
   Molecular Formula: C₂₆H₄₃NO₅
   Molecular Weight: 449.629
   Biological Source: Bile acid
   Physical Description: Cryst.
   Melting Point: Mp 187-188°
   Optical Rotation: [α]²³_{D} +45.9 (c, 1 in EtOH). [α]_{D} +53 (CHCl₃)
   Availability: Commercially available
7) Derivative: **(2-sulfoethyl)amide of deoxycholic acid**
   Synonym(s): Taurodeoxycholic acid
   CAS Registry Number: 516-50-7
   Molecular Formula: C₂₆H₄₅NO₆S
   Molecular Weight: 499.711
   Biological Source: Bile acid
   Physical Description: Cryst.
   Melting Point: Mp 141-144°
   Disclosed by: J. Zhang et al., J. Lipid Res., 1993, 34, 1895-1900
8) Derivative: **(2-sulfoethyl)amide, Na salt of deoxycholic acid**
   CAS Registry Number: 1180-95-6
   Physical Description: Cryst. (EtOH/Et2O)
   Melting Point: Mp 171-175° (160-175°) decomposition
   Optical Rotation: [α]²³_{D} +37 (c, 1 in H₂O)
   Availability: Commercially available
9) Derivative: **12-Ac of deoxycholic acid**
   CAS Registry Number: 76756-34-8
   Molecular Formula: C₂₆H₄₂O₅
   Molecular Weight: 434.615
   Physical Description: Cryst. (MeOH)
   Melting Point: Mp 174-175°
   Disclosed by: H. Gao et al., Synth. Commun. 1997, 27, 757-776
10) Derivative: **3,12-Di-Ac of deoxycholic acid**
   CAS Registry Number: 33628-48-7
   Molecular Formula: C₂₈H₄₄O₆
   Molecular Weight: 476.652
   Melting Point: Mp 120-125°
   Disclosed by: H. Gao et al., Synth. Commun. 1997, 27, 757-776
11) Derivative: **12-Ac of the (3β,5α,12α)-form of deoxycholic acid**
   Molecular Formula: C₂₆H₄₂O₅
   Molecular Weight: 434.615
   Physical Description: Cryst. (MeOH)
   Melting Point: Mp 174-175°
   Disclosed by: H. Gao et al., Synth. Commun. 1997, 27, 757-776

Of course, this listing of derivatives is merely exemplary and is not meant to limit the scope of the invention. The references listed above are incorporated herein by reference in their entirety.

As used herein, the term "stereoisomer(s)" as it relates to deoxycholic acid means any possible enantiomers, diastereomers, cis-trans-isomers and/or E-/Z-isomers of deoxycholic acid or its derivatives or its salts or its hydrates. In particular, the term "stereoisomer" means a single compound or a mixture of two or more compounds, wherein at least one stereogenic center is predominantly present in one definite isomeric form. It is also possible that two or more stereogenic centers are predominantly present in one definite isomeric form. In the sense of the present invention, "predominantly" has the meaning of at least 60%, preferably at least 70%, particularly preferably at least 80%, most preferably at least 90%.

Exemplary stereoisomers of deoxycholic acid are:
1) Stereoisomer: **allodeoxycholic acid (3α,5α,12α-form)**, β-Lagodeoxycholic acid, 3α, 12α,-dihydroxy-5α,-cholanoic acid;
   CAS Registry Number: 1912-55-6
   Molecular Formula: C₂₄H₄₀O₄
   Molecular Weight: 392.578
   Biological Source: Constit. of rabbit bile and faeces
   Physical Description: Cryst. (MeOH)
   Melting Point: Mp 214-215°
   Optical Rotation: [α]²⁷_{D} +42 (c, 0.75 in 90% EtOH aq.)
   Disclosed by: H. Danielsson et al., J. Biol. Chem., 1963, 238, 3846-3852, "*On the composition of the bile acid fraction of rabbit feces and the isolation of a new bile acid: 3α, 12α,-dihydroxy-5α,-cholanoic acid"*.
2) Stereoisomer: **12-epideoxycholic acid, (3α,5β,12β)-form of deoxycholic acid**
   Molecular Formula: C₂₄H₄₀O₄
   Molecular Weight: 392.578
   Physical Description: Cryst.
   Melting Point: Mp 188°
   Optical Rotation: [α]_{D} +38 (dioxan)
3) Stereoisomer: **(3α,5α,12α)-form of deoxycholic acid**
   Molecular Formula: C₂₄H₄₀O₄
   Molecular Weight: 392.578
   Accurate Mass: 392.29266
   Physical Description: Needles (MeOH)
   Melting Point: Mp 230°
   Optical Rotation: [α]_{D} +38 (MeOH)
4) Stereoisomer: **(3β,5β,12α)-form of deoxycholic acid**
   CAS Registry Number: 570-63-8
   Molecular Formula: C₂₄H₄₀O₄
   Molecular Weight: 392.578
   Biological Source: Constit. of rabbit faeces
   Physical Description: Cryst. (MeOH)
   Melting Point: Mp 176°
   Optical Rotation: [α]_{D} +4.7 (CHCl₃)
   Rare Chemicals Library: S96483-2
5) Stereoisomer: **(3β,5β,12β)-form of deoxycholic acid**
   CAS Registry Number: 84848-09-9
   Molecular Formula: C₂₄H₄₀O₄
   Molecular Weight: 392.578
   Physical Description: Cryst. (MeOH)
   Melting Point: Mp 204-206°
   Optical Rotation: [α]_{D} +27 (CHCl₃)

Of course, this listing of stereoisomers is merely exemplary and is not meant to limit the scope of the invention. The reference listed above is incorporated herein by reference in its entirety.

As used herein, the term "salt(s)" as it relates to deoxycholic acid means the physiologically acceptable acid addition salts and base salts of deoxycholic acid or its derivatives or its stereoisomers. Suitable acid addition salts are formed from acids which form non-toxic salts. Examples include but are not limited to the acetate, aspartate, benzoate, besylate, bicarbonate, carbonate, bisulphate, sulphate, borate, camsylate, citrate, edisylate, esylate, formate, fumarate, gluceptate, gluconate, glucuronate, hexafluorophosphate, hibenzate, hydrochloride/chloride, hydrobromide, bromide, hydroiodide, iodide, isethionate, lactate, malate, maleate, malonate, mesylate, methylsulphate, naphthylate, nicotinate, nitrate, orotate, oxalate, palmitate, pamoate, phosphate, hydrogen phosphate, dihydrogen phosphate, saccharate, acesulfamate, saccarinate, cyclamate, stearate, succinate, tartrate, tosylate and trifluoroacetate salts. Suitable base salts are formed from bases which form non-toxic salts. Examples include but are not limited to the aluminium, arginine, benzathine, calcium, choline, diethylamine, diolamine, glycine, lysine, magnesium, meglumine, olamine, potassium, sodium, tromethamine and zinc salts.

As used herein, the term "hydrate(s)" as it relates to deoxycholic acid means deoxycholic acid or a derivative or a stereoisomer or a salt thereof that include water. "Hydrate(s)" are formed by the addition of water or its elements. In one embodiment, deoxycholic acid or a derivative or a stereoisomer or a salt thereof may form crystals that incorporate water into the crystalline structure without chemical alteration.

As used herein, the term "enhance" means to have an effect on a particular flavor sensation in consumables or other products placed in the oral cavity which is found to be more pronounced (stronger, enhanced) in its taste intensity and/or which is found to have an earlier onset of the flavor sensation.

As used herein, the term "sweetness enhancer(s)" means any compound, which is capable of enhancing or intensifying the perception of sweet taste of sweetener compositions or sweetened compositions, e.g. deoxycholic acid or a derivative or a stereoisomer or a salt or a hydrate thereof. The phrase "sweetness enhancer" is synonymous to the terms "sweet taste potentiator", "sweetness potentiator", and "sweetness intensifier".

As used herein, the term "high intensity sweetener(s)" means any sweetener, which may in raw, extracted, purified, or any other from, singularly or in combination thereof have a sweetness potency greater than sucrose (common table sugar) yet have comparatively less calories.

As used herein, the term "sweetener(s)" includes all artificial and natural sweeteners, sugar alcohols (or polyols) and sugar sweeteners (or carbohydrates). Artificial and natural sweeteners include but are not limited to abiziasaponin, abrusosides, in particular abrusoside A, abrusoside B, abrusoside C, abrusoside D, acesulfame potassium, advantame, albiziasaponin, alitame, aspartame, superaspartame, bayunosides, in particular bayunoside 1, bayunoside 2, brazzein, bryoside, bryonoside, bryonodulcoside, carnosifloside, carrelame, curculin, cyanin, chlorogenic acid, cyclamates and its salts, cyclocaryoside I, dihydroquercetin-3-acetate, dihydroflavenol, dulcoside, gaudichaudioside, glycyrrhizin, glycyrrhetin acid, gypenoside, hematoxylin, isomogrosides, in particular iso-mogroside V, lugduname, magap, mabinlins, micraculin, mogrosides (lo han guo), in particular mogroside IV and mogroside V, monatin and its derivatives, monellin, mukurozioside, naringin dihydrochalcone (NarDHC), neohesperidin dihydrochalcone (NDHC), neotame, osladin, pentadin, periandrin I-V, perillartine, D-phenylalanine, phlomisosides, in particular phlomisoside 1, phlomisoside 2, phlomisoside 3, phlomisoside 4, phloridzin, phyllodulcin, polpodiosides, polypodoside A, pterocaryosides, rebaudiosides, in particular rebaudioside A, rebaudioside B, rebaudioside C, rebaudioside D, rebaudioside F, rebaudioside G, rebaudioside H), rubusosides, saccharin and its salts and derivatives, scandenoside, selligueanin A, siamenosides, in particular siamenoside I, stevia, steviolbioside, stevioside and other steviol glycosides, strogines, in particular strogin 1, strogin 2, strogin 4, suavioside A, suavioside B, suavioside G, suavioside H, suavioside I, suavioside J, sucralose, sucronate, sucrooctate, talin, telosmoside A₁₅, thaumatin, in particular thaumatin I and II, trans-anethol, trans-cinnamaldehyde, trilobatin, D-tryptophane, and combinations thereof. Sugar alcohols (or polyols) include but are not limited to erythritol, galactitol, hydrogenated starch syrups including maltitol and sorbitol syrups, inositols, isomalt, lactitol, maltitol, mannitol, xylitol, and combinations thereof. Sugar sweeteners (or carbohydrates) include monosaccharides, disaccharides, oligosaccharides and polysaccharides such as but not limited to arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, stachyose, tagatose, trehalose, xylose, and combinations thereof. The sweeteners are known substances and are for example described by H. Mitchell (H. Mitchell, "Sweeteners and Sugar Alternatives in Food Technology", Backwell Publishing Ltd, 2006) and in WO 2009/023975 A2, each of which is incorporated herein by reference in its entirety.

Suitable hydrogenated starch hydrolysates include, but are not limited to, those disclosed in U.S. patent no. 4,279,931 and various hydrogenated glucose syrups and/or powders which contain sorbitol, maltitol, hydrogenated disaccharides, hydrogenated higher polysaccharides, or combination thereof. Hydrogenated starch hydrosylates are primarily prepared by the controlled catalytic hydrogenation of con syrups. The resulting hydrogenated starch hydrosylates are mixtures of monomeric, dimeric, and polymeric saccharides.

As shown in the Examples, the inventors have now surprisingly and unexpectedly found that deoxycholic acid or a derivative or a stereoisomer or a salt or a hydrate thereof are useful as a sweetness enhancer. deoxycholic acid or a derivative or a stereoisomer or a salt or a hydrate thereof do not exhibit a liquorice, metallic or astringent aftertaste at the indicated concentration.

This taste profile makes deoxycholic acid or a derivative or a stereoisomer or a salt or a hydrate thereof desirable for use in consumables and/or other products placed in the oral cavity.

### Sweetener Compositions and Properties Thereof

In another aspect, the invention relates to a sweetener composition comprising
(a) a sweetener; and
(b) deoxycholic acid or a derivative or a stereoisomer or a salt or a hydrate thereof.

Preferably, in the sweetener composition, deoxycholic acid or a derivative or a stereoisomer or a salt or a hydrate thereof is a sweetness enhancer.

In one embodiment, the sweetener composition comprises a sweetener, e.g., the at least one additional sweetener, which is selected from the group consisting of abiziasaponin, abrusosides, in particular abrusoside A, abrusoside B, abrusoside C, abrusoside D, acesulfame potassium, advantame, albiziasaponin, alitame, aspartame, superaspartame, bayunosides, in particular bayunoside 1, bayunoside 2, brazzein, bryoside, bryonoside, bryonodulcoside, carnosifloside, carrelame, curculin, cyanin, chlorogenic acid, cyclamates and its salts, cyclocaryoside I, dihydroquercetin-3-acetate, dihydroflavenol, dulcoside, gaudichaudioside, glycyrrhizin, glycyrrhetin acid, gypenoside, hematoxylin, isomogrosides, in particular iso-mogroside V, lugduname, magap, mabinlins, micraculin, mogrosides (lo han guo), in particular mogroside IV and mogroside V, monatin and its derivatives, monellin, mukurozioside, naringin dihydrochalcone (NarDHC), neohesperidin dihydrochalcone (NDHC), neotame, osladin, pentadin, periandrin I-V, perillartine, D-phenylalanine, phlomisosides, in particular phlomisoside 1, phlomisoside 2, phlomisoside 3, phlomisoside 4, phloridzin, phyllodulcin, polpodiosides, polypodoside A, pterocaryosides, rebaudiosides, in particular rebaudioside A, rebaudioside B, rebaudioside C, rebaudioside D, rebaudioside F, rebaudioside G, rebaudioside H), rubusosides, saccharin and its salts and derivatives, scandenoside, selligueanin A, siamenosides, in particular siamenoside I, stevia, steviolbioside, stevioside and other steviol glycosides, strogines, in particular strogin 1, strogin 2, strogin 4, suavioside A, suavioside B, suavioside G, suavioside H, suavioside I, suavioside J, sucralose, sucronate, sucrooctate, talin, telosmoside A₁₅, thaumatin, in particular thaumatin I and II, trans-anethol, trans-cinnamaldehyde, trilobatin, D-tryptophane, erythritol, galactitol, hydrogenated starch syrups including maltitol and sorbitol syrups, inositols, isomalt, lactitol, maltitol, mannitol, xylitol, arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, tagatose, trehalose and xylose.

In another embodiment, the sweetener composition comprises a first additional sweetener and a second additional sweetener. Preferably, one of the first additional sweetener and the second additional sweetener is fructose.

Preferably, the at least one additional sweetener is a natural sweetener.

In another embodiment, the at least one additional sweetener is an artificial sweetener.

In another embodiment, the sweetener composition comprises deoxycholic acid or a derivative or a stereoisomer or a salt or a hydrate thereof in a purity of greater than about 60 % by weight, e.g., greater than about 70 % by weight, greater than about 80 % by weight, greater than about 90 % by weight, greater than about 98 % by weight, or greater than about 99 % by weight.

Preferably, a 1 gram portion of the sweetener composition provides sweetness comparable to one to three teaspoons of granulated sugar, preferably comparable to two teaspoons of granulated sugar.

For example, the compositions may contain sweetness comparable to that of granulated sugar (sucrose), and therefore can be used "spoon-for-spoon" or "cup-for-cup" in place of sugar.

As used herein, the phrase "sweetness comparable" means that an experienced sensory evaluator, on average, will determine that the sweetness presented in a first composition is within a range of 80% to 120% of the sweetness presented in a second composition. The phrase "a sweetness comparable" relates to a determination ascertained by four or more experienced sensor evaluators in a sweetness matching test (designated hereinafter as "taste and spit assay"), as discussed below. Thus, for instance, 100 mg/ml of a sweetener composition comprising deoxycholic acid provides "sweetness comparable" to 100 mg/ml of sucrose if the sweetener composition of the invention has a sweetness falling within the range of sweetness presented in 80-120 mg/ml of sucrose.

The sweetness and/or sweetness enhancing properties of a compound, in some embodiments, can be identified by an *in vitro* in cell based assay as described in the Examples, in EP 1 865 316 B1, which is incorporated herein by reference, or by field effector transistor technology of e.g. Alpha MOS.

The taste of a sample of a compound, e.g., deoxycholic acid, with regard to sweetness and/or sweetness enhancing properties, in other embodiments, may be assessed *in vivo* by using a panel of trained sensory evaluators experienced in the sweet taste estimation procedure, e.g. in the taste and spit assay as described e.g. in Example 2.

In these cases, panelists are asked to take a sample of the liquid to be assessed (test substance, e.g. deoxycholic acid or a derivative or a stereoisomer or a salt or a hydrate thereof) into the mouth and after some time allowed for taste perception to spit the sample out completely. Subsequently, the panelists are asked to rinse their mouth well with water or black tea to reduce any potential carry over effects. The tasting of a sample can be repeated if required.

In a first descriptive test (qualitative assessment for sweetness) the panelists are asked to taste the quality of single samples (maximum 3 subsequent samples. The individuals of the taste panel are asked to answer the following questions with regard to the quality of taste: 1) does the sample taste sweet?, 2) is there another taste detectable (bitter, sour, salty, umami)?, 3) is there an off- or aftertaste?, 4) is there anything else remarkable about the perception of the sample?

In the next step (assessment of sweetness enhancing, e.g., fructose enhancing, features) the panelists are asked to answer questions in a pairwise comparison test to determine the enhancement of sweet taste of the test substance with fructose relative to fructose only. Again the panelists are given samples. Two samples are prepared for direct comparison regarding sweetness. One sample contains fructose in a solvent and the other sample additionally contains the test substance. Designation of the samples with A and B is randomized and is decoded after the taste procedure. The questions to be answered are: 1) does one sample taste sweeter than the other?, 2) if so, which one?, 3) are there any other differences in the taste between the two samples? The result of the taste and spit assay is a qualitative evaluation of the differences between the two samples.

In another embodiment, the sweetness and/or sweetness enhancing properties of the inventive sweetener composition, when dissolved in water, correspond to a particular degrees Brix, a well-known measurement of sugar content in an aqueous solution. In some embodiments, for example, when 5 grams of sweetener composition are dissolved in 95 grams of water, the resultant solution has a sweetness that corresponds to a degrees Brix value ranging from 1 to 1000, e.g., from 5 to 500 or from 5 to 100.

Preferably, one gram of the sweetener composition contains less calories and carbohydrates than about 1 gram of granulated sugar, e.g., less than about 0.5 grams of granulated sugar.

In another embodiment of the invention, the sweetener composition of the invention is substantially free of off-taste.

In one embodiment of the invention, the sweetener composition of the invention is liquid at ambient conditions.

In another embodiment of the invention, the sweetener composition of the invention is solid at ambient conditions.

In one embodiment of the invention, the sweetener composition of the invention comprises homogeneous particles comprising the sweetener and deoxycholic acid or a derivative or a stereoisomer or a salt or a hydrate thereof. Preferably, the homogeneous sweetener particles have an average particle size of between about 50 microns and about 1250 microns, e.g., between about 100 microns and about 1000 microns.

In another embodiment of the invention, the sweetener composition comprises a mixture of first particles comprising the sweetener and second particles comprising deoxycholic acid or a derivative or a stereoisomer or a salt or a hydrate thereof.

In one embodiment of the invention, the sweetener composition contains deoxycholic acid or a derivative or a stereoisomer or a salt or a hydrate thereof as a sweetness enhancer. In this embodiment, the sweetener composition of the invention comprises from 0.0005 wt% to 1.0 wt% of deoxycholic acid or a derivative or a stereoisomer or a salt or a hydrate thereof, based on the total weight of the sweetener composition, preferably from 0.0001 wt% to 0.1 wt%, particularly preferred from 0.001 to 0.05 wt%.

### Methods of Making a Sweetener Composition of the Invention and Enhancing the Sweetness of a Sweetener Composition

In another aspect, the present invention relates to a method of making a sweetener composition comprising the step of admixing a sweetener with deoxycholic acid or a derivative or a stereoisomer or a salt or a hydrate thereof.

In one embodiment, the method yields a composition comprising deoxycholic acid or a derivative or a stereoisomer or a salt or a hydrate thereof in the form of an extract or in isolated or purified form.

In another embodiment, the sweetener composition comprises deoxycholic acid or a derivative or a stereoisomer or a salt or a hydrate thereof in a purity of greater than about 60 % by weight, e.g., greater than about 70 % by weight, greater than about 80 % by weight, greater than about 90 % by weight, greater than about 98 % by weight, or greater than about 99 % by weight.

In another embodiment, the inventive method further comprises the step of combining deoxycholic acid or a derivative or a stereoisomer or a salt or a hydrate thereof with at least one other ingredient chosen from bulking agents, carriers, fibers, sugar alcohols, oligosaccharides, sugars, high intensity sweeteners, nutritive sweeteners, flavoring, flavor enhancers, flavor stabilizers, acidulants, anti-caking, free-flow agents, and any combination thereof. Preferably, the composition comprises about 3 to about 200 mg of deoxycholic acid or a derivative or a stereoisomer or a salt or a hydrate thereof per 1 gram of the composition, e.g., about 3 to about 100 mg of deoxycholic acid or a derivative or a stereoisomer or a salt or a hydrate thereof per 1 gram of the composition, or about 5 to about 10 mg of deoxycholic acid or a derivative or a stereoisomer or a salt or a hydrate thereof per 1 gram of the composition.

In another embodiment, the invention relates to a method for enhancing the sweetness of a sweetener composition comprising a sweetener, comprising the step of adding to the sweetener deoxycholic acid or a derivative or a stereoisomer or a salt or a hydrate thereof to form an enhanced sweetener composition. Preferably, deoxycholic acid or a derivative or a stereoisomer or a salt or a hydrate thereof is added in amount effective to increase the sweetness of the sweetener composition to an increased sweetness level. In preferred embodiments, the increase sweetness level is greater than an initial sweetness level of a comparative sweetener compositionally the same as the aforementioned sweetener composition of the invention but without deoxycholic acid or a derivative or a stereoisomer or a salt or a hydrate thereof.

### Formulations

In another aspect, the present invention relates to formulations of the sweetener composition.

In these formulations, the sweetener composition of the invention may take any suitable form including, but not limited to, an amorphous solid, a crystal, a powder, a tablet, a liquid, a cube, a glace or coating, a granulated product, an encapsulated form abound to or coated on to carriers/particles, wet or dried, or combinations thereof.

For example, in one embodiment, the sweetener composition formulations can be provided in pre-portioned packets or ready-to-use formulations, which include deoxycholic acid or a derivative or a stereoisomer or a salt or a hydrate thereof. For example, in one embodiment, a single serving packet formulation (usually about a 1 gram portion) can provide sweetness comparable to that contained in two teaspoons of granulated sugar (sucrose). It is known in the art that a "teaspoon" of sucrose contains approximately 4 grams of sucrose.

In another embodiment, a volume of a ready-to-use formulation can provide sweetness comparable to the same volume of granulated sugar. Preferably, a single serving packet of the composition comprising deoxycholic acid or a derivative or a stereoisomer or a salt or a hydrate thereof (e.g., 1 gram) can provide sweetness comparable to about 0.9 to about 9.0 grams of granulated sugar (sucrose). In another embodiment, 1 gram of the sweetener composition contains less calories and carbohydrates than about 1 gram of granulated sugar.

As used herein, the term "about" encompasses the range of experimental error that occurs in any measurement. Unless otherwise stated, all measurement numbers are presumed to have the word "about" in front of them if the word "about" is not expressly used.

The formulation of the invention may contain further additives known to those skilled in the art. These additives include but are not limited to bulking agents, carriers, fibers, sugar alcohols, oligosaccharides, sugars, high intensity sweeteners, nutritive sweeteners, flavorings, flavor enhancers, flavor stabilizers, acidulants, anti-caking and free-flow agents. Such additives are for example described by H. Mitchell (H. Mitchell, "Sweeteners and Sugar Alternatives in Food Technology", Backwell Publishing Ltd, 2006, which is incorporated herein by reference in its entirety).

As used herein, the term "flavorings" may include those flavors known to the skilled person, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, watermelon, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with cooling agents.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used. This publication is incorporated herein by reference.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde. (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof. These listings of flavorings are merely exemplary and are not meant to limit either the term "flavoring" or the scope of the invention generally.

In some embodiments, the flavoring may be employed in either liquid form and/or dried form. When employed in the latter form, suitable drying means such as spray drying the oil may be used. Alternatively, the flavoring may be absorbed onto water soluble materials, such as cellulose, starch, sugar, maltodextrin, gum arabic and so forth or may be encapsulated. The actual techniques for preparing such dried forms are well-known.
In some embodiments, the flavorings may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

### Tabletop Sweetener Compositions

In another aspect, the present invention relates to tabletop sweetener compositions comprising deoxycholic acid or a derivative or a stereoisomer or a salt or a hydrate thereof and to methods of manufacturing such tabletop sweetener compositions.

"Tabletop sweetener," as used herein, refers to sweetener compositions that comprise at least one sweetener, and optionally, at least one sweetness enhancer, which can be used in the preparation of various food items and/or as an additive to food items. As one example, the tabletop sweetener may be used in the preparation of baked goods or other sweetened foods. As another example, the tabletop sweetener may be used to season, sweeten, or otherwise customize a prepared food item, e.g., beverages, fruit, or yoghurt. In a preferred aspect, the tabletop sweetener is in a crystalline, granulated, or powder form. In various aspects, the tabletop sweetener will comprise one or more sweeteners and/or one or more sweetness enhancers. In one embodiment, the tabletop sweetener may comprise either or both a caloric sweetener and/or substantially non-caloric sweeteners, and, if appropriate, one or more sweetness enhancers. Typical examples of caloric sweeteners that may be used in tabletop sweeteners include sucrose, fructose, and glucose. Common tabletop forms of these caloric sweeteners include cane sugar, bee sugar, and the like. In recent decades, substantially non-caloric sweeteners have gained popularity. In many instances, these sweeteners can be used as substitutes for caloric sweeteners and are often referred to as "sugar substitutes."

In many instances, sugar substitutes provide a greater sweetening effect than comparable amounts of caloric sweeteners, such as sucrose or fructose. Therefore, smaller amounts of sugar substitutes are required to achieve sweetness comparable to that of an amount of sugar. Sugar substitutes, however, typically have a taste profile that differs from sucrose or fructose. Such differences include, but are not limited to, increased astringency, bitterness, various aftertastes, delayed onset of sweetness, and different mouthfeel. Therefore, sugar substitutes are often formulated with other materials that can provide bulk and can enhance the taste profile to be more similar to that of sucrose or fructose. Thus, sugar substitutes have been formulated to create a tabletop sweetener formulation that has a bulk and a taste profile that is comparable to sucrose or fructose. Nevertheless, consumers can still distinguish the low-calorie sweetener formulations from caloric tabletop sweeteners. Therefore, if low-calorie tabletop sweeteners are to replace caloric tabletop sweeteners, formulations of low-calorie sweeteners must be continuously improved to meet consumer demand.

There is an increasing interest in such sweeteners containing natural ingredients. This interest stems partially from increasing consumer interest in such products, but also from the rise of retail and internet stores selling natural products, and requiring suppliers of such products to certify that natural ingredients are used in any products being supplied.

Therefore, there is a need for new tabletop sweetener formulations which are low in calories (or have no calories) and that can reasonably approximate the taste profile, mouthfeel, and texture of caloric sweeteners.

Thus, in another aspect, the invention relates to a tabletop sweetener composition comprising
(a) at least one sugar sweetener which is selected from the group consisting of monosaccharides, disaccharides, oligosaccharides and polysaccharides, preferably the at least one sugar sweetener is selected from the group consisting of arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, stachyose, tagatose, trehalose, xylose, and combinations thereof, most preferably the at least one sugar sweetener is a disaccharide and/or fructose;
(b) at least one sugar alcohol (or polyol), which is selected from the group consisting of erythritol, galactitol, hydrogenated starch syrups including maltitol and sorbitol syrups, inositols, isomalt, lactitol, maltitol, mannitol, xylitol, and combinations thereof, preferably the at least one sugar alcohol is erythritol;
(c) deoxycholic acid or a derivative or a stereoisomer or a salt or a hydrate thereof; and
(d) a taste-improving amount of cellulose.

In some embodiments of the invention, the tabletop sweetener composition comprises a disaccharide and contains no fructose. In other embodiments, the tabletop sweetener composition comprises fructose and does not contain disaccharide. In other embodiments, the tabletop sweetener compositions comprise both a disaccharide and fructose.

As used herein, the terms "sugar sweetener(s)" or "carbohydrate(s)" refer to monosaccharides, disaccharides, oligosaccharides and polysaccharides such as but not limited to arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, stachyose, tagatose, trehalose, xylose, and combinations thereof.

As used herein, the term "disaccharide" refers to any sugar having two monosaccharide units. The monosaccharide units may exist as either ketones or aldehydes, and may have either a cyclic or acyclic structure. When a monosaccharide exists as a cyclic structure, the monosaccharide may exist as a hemiacetal or hemiketal, among other forms. Moreover, when a monosaccharide exists as a cyclic structure, either anomer is included within this definition. Illustrative monosaccharides include trioses, tetroses, pentoses, hexoses, heptoses, octoses, and nonoses. In forming a disaccharide, the monosaccharide units may bond to form either reducing disaccharides or non-reducing disaccharides.

As used herein, the terms "sugar alcohol(s)" or "polyol(s)" refer to sugar alcohols such as but not limited to erythritol, galactitol, hydrogenated starch syrups including maltitol and sorbitol syrups, inositols, isomalt, lactitol, maltitol, mannitol, xylitol, and combinations thereof.

As used herein, the term "erythritol" refers to a sugar alcohol well known to the skilled person. Erythritol, in either food grade or reagent grade is readily available through commercial sources.

As used herein, the term "cellulose" refers to any cellulosic material known to the skilled person. In typical embodiments, the cellulose includes polysaccharides having linear chains of at least several hundred beta-linked D-glucose units. When obtained from commercial sources, for example, the cellulose may exist as a powder. Further, in typical embodiments, the cellulose is insoluble or substantially insoluble in water; yet, in an application like tabletop sweeteners, when incorporated in such an application, it preferably will not detract substantially from the overall product dissolution. Chemically modified celluloses can be employed in the compositions of the invention provided the modifications do not result in water soluble material. The cellulose may have any particle size (or particle size distribution) that is suitable for use in a sweetener composition. For example, in some embodiments, the size of the cellulose particles may range from about 1 micron to about 400 microns, e.g., from about 3 microns to about 300 microns, from about 5 microns to about 200 microns, or from about 6 microns to about 100 microns. In some embodiments, the insoluble cellulose is a cellulose that if used in amounts exceeding 1% in an aqueous medium can lead to significant viscosity change.

In some embodiments of the invention, a "taste-improving amount" of cellulose is used. This "taste-improving amount" refers to an amount of cellulose that imparts an unexpected improvement in the taste profile of sweetener compositions of the invention. In some instances, for example, the taste improvement may be perceived as an enhancement in the sweetness of the sweetener composition or of the beverage or foodstuff containing the sweetener composition. In other instances, for example, the taste improvement may be perceived as a reduction or masking of the bitterness of the sweetener composition or of the beverage or foodstuff containing the sweetener composition. The taste improvement may also be a combination of both sweetness enhancement and bitterness reduction. In some embodiments of the sweetener compositions, the taste-improving amount of cellulose ranges from about 0.4 % by weight to about 3.0 % by weight, e.g., from about 0.7 % by weight to about 2.0 % by weight, of cellulose, based on the total weight of the sweetener composition. In some embodiments, the sweetener composition contains about 1 % by weight cellulose, based on the total weight of the sweetener composition.

In one embodiment, the disaccharide includes, but is not limited to, disaccharides containing glucose, fructose, and galactose. In another embodiment, the disaccharide includes, but is not limited to, sucrose, lactose, maltose, trehalose, and isomaltulose. In another embodiment, the disaccharide is isomaltulose.

In a preferred embodiment of the invention, the disaccharide is selected from the group consisting of sucrose, lactose, maltose, trehalose, and isomaltulose.

Sweetener compositions of the invention may contain varying amounts of at least one sugar sweetener, in particular of a disaccharide and/or fructose, of at least one sugar alcohol, in particular of erythritol, of deoxycholic acid or a derivative or a stereoisomer or a salt or a hydrate thereof, and of cellulose. The desired amount of deoxycholic acid or a derivative or a stereoisomer or a salt or a hydrate thereof may vary depending on, among other factors, the desired use of the tabletop sweetener composition, the presence or absence of other components in the tabletop sweetener composition, the identity of any sugar sweetener, in particular of a disaccharide, if present, and the presence or absence of fructose.

In some embodiments, the tabletop sweetener composition contains from about 40 % by weight to about 70 % by weight sugar alcohol, in particular erythritol, based on the total weight of the sweetener composition, e.g., from about 50 % by weight to about 60 % by weight, from about 55 % by weight to about 65 % by weight, from about 57 % by weight to about 63 % by weight, or from about 60 % by weight to about 62 % by weight. In some embodiments, the sweetener composition contains about 55 % by weight sugar alcohol, in particular erythritol, based on the total weight of the sweetener composition. In still other embodiments, the sweetener composition contains about 61-62 % by weight sugar alcohol, in particular erythritol, based on the total weight of the sweetener composition.

In some embodiments, the tabletop sweetener composition contains from about 27 % by weight to about 50 % by weight sugar sweetener, in particular disaccharide, based on the total weight of the tabletop sweetener composition, e.g., from about 35 % by weight to about 45 % by weight from about 30 % by weight to about 40 % by weight, from about 30 % by weight to about 38 % by weight, from about 32 % by weight to about 36 % by weight, or from about 33 % by weight to about 35 % by weight. In some such embodiments, the tabletop sweetener composition contains about 41 % by weight of sugar sweetener, in particular disaccharide, based on the total weight of the sweetener composition. In still other embodiments, the tabletop sweetener composition contains about 33-34 % by weight of sugar sweetener, in particular disaccharide, based on the total weight of the sweetener composition. In a preferred embodiment, the sugar sweetener is isomaltulose.

In some embodiments, the sweetener composition contains from about 0.5 % by weight to about 7.0 % by weight deoxycholic acid or a derivative or a stereoisomer or a salt or a hydrate thereof, based on the total weight of the sweetener composition, e.g., from about 0.7 % by weight to about 5.0 % by weight, or from about 1.0 % by weight to about 2.5 % by weight. The amount of deoxycholic acid or a derivative or a stereoisomer or a salt or a hydrate thereof used may in certain situations depend on the purity of the material.

In another embodiment, tabletop sweetener compositions of the invention contain (a) from about 38 % by weight to about 43 % by weight of isomaltulose; (b) from about 50 % by weight to about 60 % by weight erythritol; (c) from about 0.75 % by weight to about 1.75 % by weight deoxycholic acid or a derivative or a stereoisomer or a salt or a hydrate thereof; and (d) from about 0.5 % by weight to about 1.5 % by weight cellulose; based on the total weight of the tabletop sweetener composition.

In another embodiment, tabletop sweetener compositions of the invention contain (a) from about 30 % by weight to about 38 % by weight of isomaltulose; (b) from about 55 % by weight to about 65 % by weight erythritol; (c) from about 0.75 % by weight to about 1.75 % by weight deoxycholic acid or a derivative or a stereoisomer or a salt or a hydrate thereof ; and (d) from about 0.5 % by weight to about 1.5 % by weight cellulose; based on the total weight of the tabletop sweetener composition.

Tabletop sweetener compositions of the invention may also contain amounts of other ingredients in addition to the sugar sweeteners such as disaccharide and/or fructose, the sugar alcohol such as erythritol, deoxycholic acid or a derivative or a stereoisomer or a salt or a hydrate thereof and cellulose. Such additional ingredients include, but are not limited to, sweetness modifiers, mouthfeel enhancers, flavorings (e.g., vanilla flavoring), and the like. Honey and/or evaporated cane juice may be used in place of or in combination with the sugar alcohol, in particular in place of or in combination with erythritol. Natural flavors and other ingredients are preferred when the product is to be labeled as "all-natural."

In another embodiment, the tabletop sweetener composition comprises less than about 2 % by weight of a sweetness modifier, e.g., less than about 1% by weight. In terms of ranges, the tabletop sweetener composition may, for example, comprise between about 0.01 % by weight and about 2 % by weight sweetness modifier, in particular between about 0.1 % by weight and about 1.5 % by weight sweetness modifier.

In another embodiment, the tabletop sweetener composition comprises less than about 1 % by weight of a mouthfeel enhancer, e.g., less than about 0.5% by weight. In terms of ranges, the tabletop sweetener composition may, for example, comprise between about 0.01 % by weight and about 1 % by weight mouthfeel enhancer, in particular between about 0.1 % by weight and about 0.5 % by weight mouthfeel enhancer.

In another embodiment, the tabletop sweetener composition comprises less than about 1 % by weight of a flavoring, e.g., less than about 0.5% by weight. In terms of ranges, the tabletop sweetener composition may, for example, comprise between about 0.01 % by weight and about 1 % by weight flavoring, in particular between about 0.1 % by weight and about 0.5 % by weight flavoring.

In some embodiments, sweetener compositions of the invention provide at least one, if not more than one, of the following desirable characteristics: (a) fewer calories per gram than standard table sugar; (b) fewer calories than an amount of standard table sugar perceived as providing comparable sweetness; and (c) lower glycemic index than that of standard table sugar. In some embodiments, the sweetener composition has less than about 5 calories/gram, or less than about 3 calories/gram, or less than about 1 calorie/gram. As used herein, the term "calorie" refers to the unit of energy commonly appearing on the packaging of food and/or beverage items sold in the United States. The term, as such, does not refer to 1 cal. of energy, but rather corresponds to approximately 1 kcal. of energy. In a typical tabletop sweetener application, for example, the sweetener composition can be packaged in a form where it provides a similar sweetness to about 7 grams of sucrose, preferably 5 g of sucrose, while providing less than about 5 calories.

In another embodiment, tabletop sweetener compositions of the invention contain a plurality of sweetener particles, wherein such particles contain one or more of the ingredients present in the tabletop sweetener composition. In some embodiments, the tabletop sweetener composition substantially comprises sweetener particles. In such embodiments, the tabletop sweetener composition contains at least about 80 % by weight sweetener particles, or at least about 85 % by weight sweetener particles, or at least about 90 % by weight sweetener particles, based on the total weight of the tabletop sweetener composition.

Sweetener particles, when present in the tabletop sweetener composition, can have any size suitable for use of the composition as a sweetener. In some embodiments, the average size of the sweetener particles is between about 50 microns and about 1250 microns, e.g., between about 100 microns and about 1000 microns. Screening to eliminate particles of undesired sizes can be carried out during the manufacturing process. Thus, in some embodiments, the particle sizes, after screening to eliminate undesired large particles which may be as large as 1500 µm, may vary up to about 16 mesh, e.g., up to about 14 mesh, or up to about 12 mesh, based on the standard United States sieve scale. Further, smaller particle sizes, e.g., about 50 mesh, 100 mesh, or 150 mesh, or particles having sizes less than about 1 µm, e.g., less than about 0.5 µm, may be present with the larger particles. Screening to eliminate particles having sizes less than, for example, about 100 mesh or 150 mesh can be carried out if desired.

Sweetener particles in the tabletop sweetener composition may or may not have uniform composition. Preferably, the tabletop sweetener compositions of the invention comprise deoxycholic acid or a derivative or a stereoisomer or a salt or a hydrate thereof and an effective amount of cellulose where the composition is a mixture of particles. More specifically, the mixture comprises (a) particles having an erythritol core and (b) particles having a disaccharide core and deoxycholic acid or a derivative or a stereoisomer or a salt or a hydrate thereof and the cellulose, as well as other components, are predominantly coated on the particles. These coatings on the cores can be either a continuous phase or a discontinuous phase, i.e., where the different coating components form discrete regions in the core coatings.

Thus, in another aspect, the invention relates to a tabletop sweetener composition comprising:
(a) a plurality of first sweetener particles, where the first sweetener particles have (i) a sugar alcohol core, in particular an erythritol core, (ii) a first sugar alcohol core-coating layer, in particular a first erythritol core-coating layer comprising deoxycholic acid or a derivative or a stereoisomer or a salt or a hydrate thereof and cellulose, and (iii) a second sugar alcohol core-coating layer, in particular a second erythritol core-coating layer comprising a sugar sweetener, in particular a disaccharide carbohydrate, where the second sugar alcohol core-coating layer, in particular the second erythritol core-coating layer is disposed over the first sugar alcohol core-coating layer, in particular over the erythritol core-coating layer; and
(b) a plurality of second sweetener particles, where the second sweetener particle has (i) a sugar sweetener core, in particular a disaccharide core, (ii) a first sugar sweetener core-coating layer, in particular a first disaccharide core-coating layer comprising deoxycholic acid or a derivative or a stereoisomer or a salt or a hydrate thereof and cellulose, and (iii) a second sugar sweetener core-coating layer, in particular a second disaccharide core-coating layer comprising a sugar sweetener, in particular a disaccharide carbohydrate, where the second sugar sweetener core-coating layer, in particular the second disaccharide core-coating layer, is disposed over the first sugar sweetener core-coating layer, in particular over the disaccharide core-coating layer.

In such embodiments, the core-coating layers may or may not have uniform compositions, and may or may not substantially coat the underlying core or layer. In some embodiments, the first sugar alcohol core-coating layer, in particular the first erythritol core-coating layer and/or the first sugar sweetener core-coating layer, in particular the first disaccharide core-coating layer have discrete regions of deoxycholic acid or a derivative or a stereoisomer or a salt or a hydrate thereof and cellulose.

In another embodiment, the tabletop sweetener composition comprises a mixture of the plurality of first sweetener particles and the plurality of second sweetener particles.

In another embodiment of the tabletop sweetener composition, the sugar sweetener core, in particular the disaccharide core contains isomaltulose. Further, in some embodiments, the second sugar alcohol core-coating layer in particular the second erythritol core-coating layer and/or the second sugar sweetener core-coating layer in particular the disaccharide core-coating layer contain isomaltulose.

These tabletop sweetener compositions may also contain flavorings (e.g., vanilla flavor), mouthfeel enhancers, and/or sweetness modifiers. When one or more of these are present, the first sugar alcohol core-coating layer, in particular the first erythritol core-coating layer and/or the sugar sweetener core-coating layer in particular the disaccharide core-coating layer may contain one or more of flavorings (e.g., vanilla flavor), mouthfeel enhancers, and/or sweetness modifiers. Moreover, as used herein, the term "layer" may or may not refer to a material that entirely surrounds the underlying material. Thus, a "layer" may be non-uniform in composition and may provide only discontinuous coverage of the underlying material. Moreover, when one layer covers another, the boundary between the layers may or may not be discrete; thus, the boundary between layers may be continuous or semi-continuous.

In the sweetener compositions described herein, the tabletop sweetener compositions may or may not contain other particles in addition to the plurality of first sweetener particles and the plurality of second sweetener particles. The first sweetener particles and the second sweetener particles may have any particle size that is suitable for use of the composition as a sweetener.

In some embodiments, the average size of the first sweetener particles and second sweetener particles is between about 50 microns and about 1250 microns, e.g., between about 100 microns and about 1000 microns. In some embodiments, the particle sizes of the first sweetener particles and the second sweetener particles, after screening to eliminate undesired large particles which may be as large as 1500 µm, will vary up to about 16 mesh, e.g., up to about 14 mesh, or up to about 12 mesh, based on the standard United States sieve scale. Further, smaller particle sizes, e.g., about 50 mesh, 100 mesh, or 150 mesh, or particles having sizes less than about 1 µm, e.g., less than about 0.5 µm, will be present with the larger particles. In some embodiments, the tabletop sweetener composition comprises a mixture of the plurality of first sweetener particles and the second sweetener particles. Such a mixture may or may not contain other types of particles.

The layers in the sweetener composition particles are generally not distinct, i.e., there is no clear demarcation between the first layer and the second layer. For example, in one embodiment, the first layer contains deoxycholic acid or a derivative or a stereoisomer or a salt or a hydrate thereof, optional flavoring components, etc., all encased in sugar sweetener, in particular encased in disaccharide; and the second layer will be predominantly sugar sweetener, in particular disaccharide with some of the other components. The relative quantities of the various components in the layers, and whether there are layers in the particles, can be modified as necessary by adjusting when during the manufacturing process the components are added.

In some embodiments of the invention, the tabletop sweetener composition comprises deoxycholic acid or a derivative or a stereoisomer or a salt or a hydrate thereof and a taste-improving amount of cellulose as a mixture, where the mixture comprises (a) particles having a sugar alcohol core, in particular an erythritol core and (b) particles having a sugar sweetener core, in particular a disaccharide core. In some such embodiments, the disaccharide core comprises isomaltulose. Further, in some such embodiments, the sugar alcohol core, in particular the erythritol core and/or the sugar sweetener core, in particular the disaccharide core further comprise coating layers having discrete regions of deoxycholic acid or a derivative or a stereoisomer or a salt or a hydrate thereof and cellulose. When such coating layers are present, the coating layers may or may not substantially coat the underlying core material. These particles may have any particle size that is suitable for use of the composition as a sweetener. In some embodiments, the average size of the particles is between about 50 microns and about 1250 microns, e.g., between about 100 microns and about 1000 microns. In some embodiments, the particle sizes of the particles range from about 16 mesh, or from about 14 mesh, or from about 12 mesh to about 100 mesh, based on the standard United States sieve scale.

Sweetener compositions of the invention may have any dissolution rate in water that is suitable for their use as sweeteners. In some embodiments, the sweetener composition can have a dissolution rate in water at 10°C of between about 100 seconds and about 200 seconds, e.g., between about 125 seconds and about 175 seconds, or between about 140 seconds and 160 seconds, based on the dissolution of about 2 grams of the sweetener composition in 240 ml of water. In some embodiments, the sweetener composition can have a dissolution rate in water at 45°C of between about 50 seconds and about 150 seconds, e.g., between about 75 seconds and about 125 seconds, or between about 85 seconds and 110 seconds, based on the dissolution of about 2 grams of the sweetener composition in 240 ml of water. In some embodiments, the dissolution rate of the sweetener composition is about 150 seconds at 10°C and about 96 seconds at 45°C, based on the dissolution of about 2 grams of the sweetener composition in 240 mL of stirred water.

In another embodiment, the invention relates to single-serving packets.

In another embodiment, the invention relates to tabletop sweeteners comprising deoxycholic acid or a derivative or a stereoisomer or a salt or a hydrate thereof. Preferably, the tabletop sweetener is a tabletop tablet sweeteners, tabletop "spoon to spoon" sweeteners, tabletop "sachet" sweeteners, tabletop liquid sweeteners, The tabletop sweeteners, in addition to deoxycholic acid or a derivative or a stereoisomer or a salt or a hydrate thereof component, may contain further substances including but not limited to aspartame, acesulfame potassium, binding agents, citric acid, cyclamate, lactose, carboxymethylcellulose, leucin, maltodextrin, isomalt, NHDC, potassium hydroxide (in aqueous solution), dextrose, other bulking agents, sucralose, sodium cyclamate, sodium hydrogen carbonate, sodium saccharin and tartaric acid.

In another embodiment, the invention relates to a package containing a predetermined amount, e.g., from about 0.8 grams to about 3.5 grams, of a solid tabletop sweetener composition, where the predetermined amount of the solid tabletop sweetener composition has a sweetness equivalent to about four times (by weight) the predetermined amount of sucrose, and where the solid sweetener composition comprises:
(a) from about 38 % by weight to about 43 % by weight of isomaltulose;
(b) from about 50 % by weight to about 60 % by weight erythritol;
(c) from about 0.75 % by weight to about 1.75 % by weight of deoxycholic acid or a derivative or a stereoisomer or a salt or a hydrate thereof; and
(d) from about 0.5 % by weight to about 1.5 % by weight cellulose.

In another embodiment, the invention relates to a package containing a predetermined amount, e.g., from about 0.8 grams to about 3.5 grams, of a solid sweetener composition, where the predetermined amount of the solid sweetener composition has a sweetness equivalent to about four times (by weight) the predetermined amount of sucrose, and where the solid sweetener composition comprises:
(a) from about 30 % by weight to about 38 % by weight of isomaltulose;
(b) from about 55 % by weight to about 65 % by weight erythritol;
(c) from about 0.75 % by weight to about 1.75 % by weight of deoxycholic acid or a derivative or a stereoisomer or a salt or a hydrate thereof; and
(d) from about 0.5 % by weight to about 1.5 % by weight cellulose.

In the tabletop sweetener packages containing a predetermined amount of the solid tabletop sweetener composition, the predetermined amount may be about 1 gram and may have a sweetness equivalent to about 4 grams of sucrose, or the predetermined amount may be about 2 grams and may have a sweetness equivalent to about 8 grams of sucrose.

The tabletop sweetener packages may contain a formulation for a ready-to-use sweetener or tabletop sweetener compositions in the form of cubes for use, for example, in restaurants. The cubes weigh approximately 8 grams and are of equivalent size to a standard cube of granulate sugar, which is 2.2cm x 2.2 cm x 1 cm.

Tabletop sweetener compositions of the invention may have any bulk density that is suitable for their use as sweeteners. In some embodiments, the bulk density of the sweetener composition ranges from about 0.5 g/cm³ to about 1.0 g/cm³, or from about 0.7 g/cm³ to about 0.8 g/cm³. In some embodiments, the bulk density of the sweetener composition is about 0.76 g/cm³.

In another aspect, the invention relates to a method of making a tabletop sweetener composition, comprising the steps of:
a) providing a fluid-bed coating apparatus;
b) introducing dry sugar sweetener, in particular disaccharide and/or fructose; dry sugar alcohol, in particular erythritol; dry deoxycholic acid or a derivative or a stereoisomer or a salt or a hydrate thereof; and dry cellulose powder to the fluid-bed coating apparatus;
c) charging a substantially all of the dry ingredients in the fluid-bed coating apparatus;
d) spraying a coating solution into the fluid-bed coating apparatus to form coated sweetener particles; and
e) drying the coated sweetener particles.

In another aspect, the invention relates to a method of making a tabletop sweetener composition, comprising the steps of:
a) providing a fluid-bed coating apparatus;
b) introducing dry sugar sweetener, in particular disaccharide carbohydrate and/or fructose; dry sugar alcohol, in particular erythritol; and dry deoxycholic acid or a derivative or a stereoisomer or a salt or a hydrate thereof to the fluid-bed coating apparatus;
c) charging a substantially all of the dry ingredients in the fluid-bed coating apparatus;
d) spraying a coating solution into the fluid-bed coating apparatus to form coated sweetener particles;
e) during the spraying step, introducing dry cellulose powder to the fluid-bed coating apparatus; and
f) drying the coated sweetener particles.

The methods of the invention described above may be carried out as described in WO 2010/025158 A1, which is incorporated herein by reference in its entirety.

### Consumables containing a Sweetener Composition or a Tabletop Sweetener Composition of the Invention

The inventive sweetener compositions comprising deoxycholic acid or a derivative or a stereoisomer or a salt or a hydrate thereof described above can be added to any consumable products including but not limited to beverages, dental products, cosmetic products, pharmaceutical products and animal feed or animal food. The inventive tabletop sweetener compositions as described above can be added to any consumable products, which are produced in a household or on a small scale.

Thus, in one aspect, the invention relates to a consumable comprising
(a) a consumable product; and
(b) a sweetener composition of the invention as defined above.

Thus, in another aspect, the invention relates to a consumable comprising
(a) a consumable product; and
(b) a tabletop sweetener composition of the invention as defined above.

Preferably, the consumable comprises at least one, e.g., at least two, sweeteners, in addition to deoxycholic acid or a derivative or a stereoisomer or a salt or a hydrate thereof. In these embodiments, deoxycholic acid or a derivative or a stereoisomer or a salt or a hydrate thereof may function as an enhancer to enhance the sweetness of the at least one sweetener.

Preferably, the sweetener composition of the invention and the tabletop sweetener composition of the invention are present in the consumable in an amount effective to increase a sweetness level of the consumable.

Preferably, the consumable contains deoxycholic acid or a derivative or a stereoisomer or a salt or a hydrate thereof as a sweetness enhancer. In this embodiment, in the consumable of the invention deoxycholic acid or a derivative or a stereoisomer or a salt or a hydrate thereof is present in a concentration from 0.1 wppm to 100 wppm, in particular from 0.2 wppm to 50 wppm, particularly preferred from 0.5 wppm to 10 wppm.

The following consumable products and their ingredients are suitable for use in embodiments of the present invention.

Consumable products include all food products, including but not limited to cereal products, rice products, tapioca products, sago products, baker's products, biscuit products, pastry products, bread products, confectionery products, desert products, gums, chewing gums, chocolates, ices, honey products, treacle products, yeast products, baking-powder, salt and spice products, savoury products, mustard products, vinegar products, sauces (condiments), tobacco products, cigars, cigarettes, processed foods, cooked fruits and vegetable products, meat and meat products, jellies, jams, fruit sauces, egg products, milk and dairy products, yoghurts, cheese products, butter and butter substitute products, milk substitute products, soy products, edible oils and fat products, pharmaceuticals, beverages, carbonated beverages, alcoholic drinks, beers, soft drinks, mineral and aerated waters and other non-alcoholic drinks, fruit drinks, fruit juices, coffee, artificial coffee, tea, cacoa, including forms requiring reconstitution, food extracts, plant extracts, meat extracts, condiments, sweeteners, nutraceuticals, gelatins, pharmaceutical and non-pharmaceutical gums, tablets, lozenges, drops, emulsions, elixirs, syrups and other preparations for making beverages, and combinations thereof.

As used herein, the term "non-alcoholic drinks" includes, but is not limited to all non-alcoholic drinks mentioned in the Directive 2003/115/EC of 22 December 2003 and in the Directive 94/35/EC of 30 June 2004, which are incorporated herein by reference, on sweeteners for use in foodstuffs. Examples include, but are not limited to water-based, flavored drinks, energy-reduced or with no added sugar, milk- and milk-derivative-based or fruit-juice-based drinks, energy-reduced or with no added sugar, "Gaseosa": non-alcoholic water-based drink with added carbon dioxide, sweeteners and flavorings.

Consumable products include without limitation, water-based consumable products, solid dry consumable products, dairy products, dairy-derived products and dairy-alternative products.

In one embodiment, the consumable product is a water-based consumable product including but not limited to beverage, water, aqueous beverage, enhanced/slightly sweetened water drink, flavored carbonated and still mineral and table water, non-carbonated beverage, carbonated water, still water, soft drink, non-alcoholic drink, alcoholic drink, beer, wine, liquor, fruit drink, juice, fruit juice, vegetable juice, broth drink, coffee, tea, black tea, green tea, oolong tea, herbal infusion, cacoa (e.g., water-based), tea-based drink, coffee-based drinks, cacao-based drink, infusion, syrup, frozen fruit, frozen fruit juice, water-based ice, fruit ice, sorbet, dressing, salad dressing, jams, marmalades, canned fruit, savoury, delicatessen products like delicatessen salads, sauces, ketchup, mustard, pickles and marinated fish, sauce, soup, and beverage botanical materials (whole or ground), or instant powder for reconstitution (coffee beans, ground coffee, instant coffee, cacao beans, cacao powder, instant cacao, tea leaves, instant tea powder).

In another embodiment, the consumable product is a solid dry consumable product including but not limited to cereals, baked food products, biscuits, bread, breakfast cereal, cereal bar, energy bars/nutritional bars, granola, cakes, rice cakes, cookies, crackers, donuts, muffins, pastries, confectioneries, chewing gum, chocolate products, chocolates, fondant, candy, hard candy, marshmallow, pressed tablets, snack foods, botanical materials (whole or ground), and instant powders for reconstitution.

In another embodiment, the consumable product is selected from the group of a dairy product, dairy-derived product and dairy-alternative product, including but not limited to milk, fluid milk, cultured milk product, cultured and noncultured dairy-based drink, cultured milk product cultured with lactobacillus, yoghurt, yoghurt-based beverage, smoothy, lassi, milk shake, acidified milk, acidified milk beverage, butter milk, kefir, milk-based beverages, milk/juice blend, fermented milk beverage, icecream, dessert, sour cream, dip, salad dressing, cottage cheese, frozen yoghurt, soy milk, rice milk, soy drink, and rice milk drink.

Preferably, the consumable product is a carbonated drink and the invention relates to a carbonated drink comprising a sweetener composition of the invention or a tabletop sweetener composition of the invention.

Preferably, the consumable product is a non-carbonated drink and the invention relates to a non-carbonated drink comprising a sweetener composition of the invention or a tabletop sweetener composition of the invention.

In another embodiment, the consumable products are alcoholic beverages and the invention relates to alcoholic beverages comprising a sweetener composition of the invention or a tabletop sweetener composition of the invention, preferably to shandy beer, wine cooler, wildberry cooler (e.g., 5% alcohol), strawberry daiquiri cooler (e.g., 5% alcohol), margarita cooler (e.g. 5% alcohol) and raspberry cooler. In addition, the alcoholic beverages may contain further substances including but not limited to acesulfame potassium, aspartame, beer, color, citric acid monohydrate, cyclamate, fruit juice (e.g. peach, pineapple), lemon flavor, margarita flavor, rum flavor, sucrose, vodka, wildberry flavor, wine and water.

In another embodiment, the consumable products are fruit juices and the invention relates to fruit juices comprising a sweetener composition of the invention or a tabletop sweetener composition of the invention, preferably to functional fruit drinks (e.g., 30 % fruit juice content), fruit nectar, fruit juice drinks, no sugar added fruit beverages (e.g., 5 % juice, kiwi-strawberry flavored) and ruby red grapefruit and tangerine juice drinks (from concentrate). In addition, the fruit juices may contain further substances including but not limited to acesulfame potassium, aspartame, anthocyane, ascorbic acid, carotinoids, citric acid (e.g., anhydrous), cyclamate, luteine, fruit concentrate, fruit juice concentrate, flavor, fruit, grapefruit pulp cells, grapefruit flavor, kiwi juice concentrate, kiwi-strawberry flavor, malic acid, pectin, ruby red grapefruit concentrate, strawberry juice concentrate, tangerine juice concentrate, tangerine flavor, vegetable extract (e.g. grape, pumpkin, carrot, aronia, blackcurrant, hibiscus etc.) and water.

In another embodiment, the consumable product is ice tea and the invention relates to ice tea comprising a sweetener composition of the invention or a tabletop sweetener composition of the invention, preferably to ice tea and sugar free ice tea mix. In addition, the ice tea may contain further substances including but not limited to base with lemon flavor, base with tea component, citric acid, cyclamate, flavor, instant tea, lemon juice, maltodextrin, malic acid (e.g., powdered), saccharin, sucralose, sucrose, tea and tea extract.

In another embodiment, the consumable products are soft drinks without sugar and the invention relates to soft drinks without sugar comprising a sweetener composition of the invention or a tabletop sweetener composition of the invention, preferably to soft drinks Cola flavored, fruit nectars, fruit juice drinks, soft drinks, soft drinks lemon lime flavored, diet sparkling waters (e.g., peach flavored) and sugar free liquid beverages. In addition, the soft drinks without sugar may contain further substances including but not limited to acesulfame potassium, alitame, aspartame, bilberry flavor, citric acid monohydrate, caffeine, cola flavor, cyclamate, peach flavor, potassium citrate, sodium-cyclamate, grape color, grape flavor, sodium benzoate, sodium citrate, sodium-saccharin, ethylmaltol, flavor, lemon-lime flavor, maltol, neotame, NHDC, passion fruit flavor, pectin, phosphoric acid (85%), saccharin, sucralose and water.

In another embodiment, the consumable products are soft drinks with sugar and the invention relates to soft drinks with sugar comprising a sweetener composition of the invention or a tabletop sweetener composition of the invention. In addition, the soft drinks with sugar may contain further substances including but not limited to acesulfame potassium, aspartame, citric acid monohydrate, concentrate, caffeine, flavor, fructose, glucose, glucose syrup, high fructose con syrup (HFCS, e.g., HFCS having total solids: approx. 77 %, fructose: 55 % and glucose: 41 %), neotame, orangeade base, phosphoric acid (e.g., 85%), sodium-cyclamate, sucrose and water.

In another embodiment, the consumable products are sports drinks and the invention relates to sports drinks comprising a sweetener composition of the invention or a tabletop sweetener composition of the invention, preferably to isotonic energy drinks and whey drinks. In addition, the sports drinks may contain further substances including but not limited to acesulfame potassium, aspartame, ascorbic acid, concentrate, caffeine, citric acid, flavor, glucose (anhydrous), herbs, minerals, neohesperidine-DC, natural extracts, sucralose, taurine, vitamins, water and whey powder.

In another embodiment, the consumable products are dry powder beverages and the invention relates to dry powder beverages comprising a sweetener composition of the invention or a tabletop sweetener composition of the invention. In addition, the dry powder beverages may contain further substances including but not limited to acesulfame potassium, aspartame, apple flavor, ascorbic acid, citric acid, cherry flavor, malic acid, orange flavor, raspberry flavor, sodium chloride, trisodium citrate, tricalcium phosphate, titanium dioxide and xantham gum.

In another embodiment, the consumable product is ice coffee and the invention relates to ice coffee comprising a sweetener composition of the invention or a tabletop sweetener composition of the invention. In addition, the ice coffee may contain further substances including but not limited to acesulfame potassium, aspartame, coffee extract, ethylmaltol, flavor and neohesperidine-DC.
In another embodiment, the consumable products are instant cake fillings and the invention relates to instant cake fillings comprising a sweetener composition of the invention or a tabletop sweetener composition of the invention. In addition, the cake fillings may contain further substances including but not limited to milk, isomalt, oligofructose, modified starch, flavors and colors. In another embodiment, the cake fillings may contain further substances including but not limited to raspberries, strawberry puree, polydextrose, isomalt, sorbitol, glycerin, fructose, pectin, locust bean gum, calcium chloride, sodium bicarbonate, citric acid and water.

In another embodiment, the consumable products are biscuits and the invention relates to biscuits comprising a sweetener composition of the invention or a tabletop sweetener composition of the invention. In addition, the biscuits may contain further substances including but not limited to isomalt, powdered isomalt, granulated isomalt, polydextrose, shortening, water, sodium bicarbonate, ammonium bicarbonate, skimmed milk powder, salt, flour, cake flour, flavor, inulin, wheat fiber, shortening, ground raisins, raisin paste, salt, oatrim gel, liquid whole eggs, liquid egg whites, powdered egg whites, egg yolk, vanilla, butter flavor, vanilla flavor, chocolate flavor, cocoa, high fructose corn syrup (HFCS), methocel, baking soda, cinnamon, sodium acid pyrophosphate, margarine spread, margarine, emulsifier, molasses, mono- and diglycerides, powdered cellulose, ground hazelnuts, hazelnuts, sorbitol, oat fiber, vital wheat gluten, chocolate chips, maltitol and fat replacer.

In another embodiment, the consumable products are cakes and the invention relates to cakes comprising a sweetener composition of the invention or a tabletop sweetener composition of the invention. In addition, the cakes may contain further substances including but not limited to baking powder, baking soda, blueberry flavor, all purpose flour, cake flour, diacetyl 4X, dextrose, dried butter flavor, flour, cellulose, crystalline fructose, emulsifier, egg whites solid, eggs, dried egg white, fat replacers such as inulin, isomalt, lecithin, milk, non fat dry milk, modified starch, maltodextrin, oligofructose, potato fiber, polydextrose, salt, shortening, crystalline sorbitol, sodium aluminium phosphate, sucrose, butter flavor, chocolate flavor, (dried) vanilla flavor, water, wheat fiber, xanthan gum and vegetable oil.

In another embodiment, the consumable products are bakery products other than cakes and the invention relates to bakery products other than cakes comprising a sweetener composition of the invention or a tabletop sweetener composition of the invention, preferably to light hot fudge toppings, tartlets with strawberry fillings, sugar free maple flavored syrups, sugar free dark chocolate coatings, sugar free chocolate syrups, reduced-calorie chocolate syrups, no sugar added caramel corn, light chocolate frostings, light caramel toppings and light apple tart. In addition, the bakery products may contain further substances including but not limited to acesulfame potassium, aspartame, baking powder, baking soda, disodium phosphate, maple flavor, caramel flavor, caramel color, flour, carrageenan, cocoa powder, cocoa butter, (microcrystalline) cellulose, citric acid, calcium chloride, crystalline fructose, fructose, chocolate liquor, eggs, dried egg white, fudge flavor, isomalt, lecithin, non fat dry milk, hydrogenated starch hydrolysate, margarine, modified starch, maltisorb, maltodextrin, nonfat dry milk, oligofructose, potassium sorbate, pectin, potato fiber, hydrogenated potato starch, polydextrose, skimmed milk powder, shortening, (crystalline) sorbitol, sodium benzoate, salt, sorbitol, potassium sorbate, (powdered) sucrose, butter flavor, chocolate flavor, vanillin, (dried) vanilla flavor, water, wheat fiber and xanthan gum.

In another embodiment, the consumable products are confectionary products and the invention relates to confectionary products comprising a sweetener composition of the invention or a tabletop sweetener composition of the invention, preferably to all confectionary products mentioned in the Directive 2003/115/EC of 22 December 2003 and in the Directive 94/35/EC of 30 June 2004 on sweeteners for use in foodstuffs, each of which are incorporated herein by reference. Examples include, but are not limited to, confectionaries (with or without added sugar), cocoa- or dried-fruit-based confectionaries, energy-reduced or with not added sugar, starch-based confectionaries, energy-reduced or with not added sugar, comets and wafers for ice-cream, with not added sugar, *Essoblaten*, cocoa-, milk-, dried-fruit- or fat-based sandwich spreads, energy-reduced or with not added sugar, breakfast cereals, e.g., with a fiber content of more than 15%, and containing at least 20% bran, energy-reduced or sugar-reduced, breath-freshening micro-sweets with or without added sugar, strongly flavored freshening throat pastilles with or without added sugar, chewing gum with or without added sugar, energy-reduced tablet form confectioneruies, cider and perry, drinks consisting of a mixture of a non-alcoholic drink and beer, cider, perry, spirits or wine, spirit drinks containing less than 15% alcohol by volume, alcohol-free beer or beer with an alcohol content not exceeding 1,2% vol., "bière de table/Tafelbier/table beer" (original wort content less than 6%), except for "obergäriges Einfachbier", beers with a minimum aciditiy of 30 milli-equivalents expressed as NaOH, brown beers of the "oud bruin" type, energy-reduced beer, edible ices, energy-reduced or sugar-reduced canned or bottled fruit, energy-reduced or with or without added sugar, energy-reduced jams, jellies and marmalades, energy-reduced fruit and vegetable preparations, sweet-sour preserves of fruit and vegetables, *Feinkostsalat*, sweet-sour preserves and semi-preserves of fish and marinades of fish, crustaceans and mollusks, energy-reduced soups, sauces, mustard, fine bakery products for special nutritional uses, foods intended for use in energy-restricted diets for weight reduction as referred to in Directive 1996/8/EC, dietary foods for special medical purposes as defined in Directive 1999/21/EC, food supplements as defined in Directive 2002/46/EC supplied in a liquid form, food supplements as defined in Directive 2002/46/EC supplied in a solid form, food supplements as defined in Directive 2002/46/EC, based on vitamins and/or mineral elements and supplied in a syrup-type or chewable form. These Directives are incorporated herein by reference. Particularly preferred confectionary products are sugar free hard candy, reduced calorie no sugar added hard candy, hard candies, sugar free milk chocolate, milk chocolate, sugar free gummy bear, reduced calorie no sugar added gummy bear, sugar free dark chocolate, reduced calorie no sugar added hard candy, reduced calorie no sugar added caramel, reduced calorie caramel, raspberry jellies, jellies, plain bitter chocolate, toffees, sugar-free rice cake, sugar free peppermint breathmint, sugar free orange chewy candy and sugar free jelly beans. In addition, the confectionary products may contain further substances including but not limited to butter fat, (caramel) flavor, citric acid (monohydrate), cherry flavor, chocolate liquor, cocoa butter, cocoa mass, color, corn syrup, (microcrystalline) cellulose, disodium phosphate, egg Albumen-dried, evaporated milk, gelatin, glycerol monostearate, gum Arabic, hydrogenated starch hydrolysate, hydrogenated fat, isomalt, lecithin, lemon oil, maltitol (syrup, powdered and/or granular), medium-grain brown rice, Korean black rice, maltol, mocha paste, neohesperidine-DC, orange flavor, pectin, peppermint flavor, polydextrose, raspberry puree, raspberry puree, salt, sodium caseinate, sorbitol (powder), starch, sucrose, vanillin, vegetable fat, whole milk powder, skimmed milk powder, water and xylitol.

In another embodiment, the consumable products are delicacies sauces and the invention relates to delicacies sauces comprising a sweetener composition of the invention or a tabletop sweetener composition of the invention, preferably to sugar reduced ketchup with sugar, no added sugar Ketchup and tomato ketchup. In addition, the delicacies sauces may contain further substances including but not limited to citric acid, modified starch, mustard, onions, pectin, polydextrose, saccharine sodium, salt, spices, sucralose, sugar, thickener, tomato concentrate and vinegar.

In another embodiment, the consumable products are cereals and the invention relates to cereals comprising a sweetener composition of the invention or a tabletop sweetener composition of the invention.

In another embodiment, the consumable products are dairy products and the invention relates to dairy products comprising a sweetener composition of the invention or a tabletop sweetener composition of the invention, preferably to fruit quarks, whipped creams, (vanilla flavored skim) milk drinks and yoghurt drinks. In addition, the dairy products may contain further substances including but not limited to acesulfame potassium, aspartame, blackcurrant, blackberry, blueberry, cyclamate, flavor, fruit preparation, fruit juice concentrate, fructose, gelatin, inulin, oat, orange juice, pectin, raspberry, redcurrant, stabilizer, wheat fiber, water, quarks, yoghurt, whipped cream and whey.

In another embodiment, the consumable products are desserts and the invention relates to desserts comprising a sweetener composition of the invention or a tabletop sweetener composition of the invention, preferably to jellied red fruit cocktails, strawberry sorbet, (fat-free/sugar-free) instant pudding chocolate flavors, instant desserts, vanilla puddings, vanilla pudding - powder mixtures and litchee gelees. In addition, the desserts may contain further substances including but not limited to acesulfame potassium, aspartame, blackberries, brandy, citric acid, caramel color, color, cyclamate, chocolate flavor, cocoa powder, corn starch, disodium phosphate, emulsifier, fructose, granulated sugar, white soft sugar, agar powder, ingestible dextrin, mannan, maltodextrin, mono- and diglycerides, inulin, polydextrose, lemon juice, maltodextrin, milk modified food starch, polydextrose, raspberries, redcurrant juice, salt, soy lecithin, strawberries, strawberry puree, tetrasodium pyrophosphate, litchee flavor, vanilla flavor, wheat starch, water and xanthan gum.

As used herein, the term "desserts" includes, but is not limited to all desserts mentioned in the Directive 2003/115/EC of 22 December 2003 and in the Directive 94/35/EC of 30 June 2004 on sweeteners for use in foodstuffs. These Directives are incorporated herein by reference. Examples include, but are not limited to water-based flavored desserts, energy-reduced or with not added sugar, milk- and milk-derivative-paste preparations, energy-reduced or with no added sugar, fruit-and-vegetable-based desserts, energy-reduced or with no added sugar, egg-based desserts, energy-reduced or with no added sugar, cereal-based desserts, energy-reduced or with no added sugar, breakfast cereals or cereal-based products, energy-reduced or with no added sugar, fat-based desserts, energy-reduced or with no added sugar, edible ices, energy-reduced or with no added sugar, jams, jellies, marmalades and crystallized fruit, energy-reduced or with no added sugar, fruit preparations, energy-reduced or with no added sugar, and "snacks", certain flavors of ready-to-eat, prepacked, dry, savoury starch products and coated nuts.

In another embodiment, the consumable product is water-based ice and the invention relates to water-based ice comprising a sweetener composition of the invention or a tabletop sweetener composition of the invention, preferably to "ice-pops" and no sugar added strawberry sorbet. In addition, the water-based ice may contain further substances including but not limited to acesulfame potassium, aspartame, citric acid, color, fruit concentrate, flavor, isomalt, lemon juice, polydextrose, strawberry puree, sorbitol, thickener and water.

In another embodiment, the consumable product is ice cream and the invention relates to ice cream comprising a sweetener composition of the invention or a tabletop sweetener composition of the invention. In addition, the ice-cream may contain further substances including but not limited to color, emulsifier, flavor, isomalt, milk fat, fat replacer, skim milk powder, polydextrose and lactitol.

In another embodiment, the consumable product is yoghurt and the invention relates to yoghurt comprising a sweetener composition of the invention or a tabletop sweetener composition of the invention. In addition, the yoghurt may contain further substances including but not limited to acesulfame potassium, alitame, aspartame, citric aid monohydrate, tri-calcium-dicitrate, cyclamate, Na-cyclamate, fruit preparation, high fructose corn syrup (HFCS), inulin, fructose, fructose syrup, oligofructose syrup, neohesperidine-DC, pectin-solution, saccharin, starch, strawberries, strawberry-flavor, sucralose, water and (low fat, preferably between 0,1 % to 1,5 % fat) yoghurt.

In another embodiment, the consumable products are jams and the invention relates to jams comprising a sweetener composition of the invention or a tabletop sweetener composition of the invention. In addition, the jams may contain further substances including but not limited to gelling agent, isomalt, maltitol, pectin, sorbitol and strawberries.

In another embodiment, the consumable product is chewing-gum and the invention relates to chewing-gum comprising a sweetener composition of the invention or a tabletop sweetener composition of the invention.

The amount of deoxycholic acid or a derivative or a stereoisomer or a salt or a hydrate thereof in the consumable of the invention is dependent on the concentration of the natural and or artificial sweeteners contained therein as well as on the presence of further auxiliary substances such as carbon dioxide, flavors (e.g. spices, natural extract or oils), colors, acidulants (e.g. phosphoric acid and citric acid), preservatives, potassium, sodium. The amount of deoxycholic acid or a derivative or a stereoisomer or a salt or a hydrate thereof may generally be between 0.01 mg and 10 g of deoxycholic acid or a derivative or a stereoisomer or a salt or a hydrate thereof per kg of the entire finished consumable, e.g., between 0.01 and 1 g of deoxycholic acid or a derivative or a stereoisomer or a salt or a hydrate thereof per kg, between 0.1 mg and 500 mg of deoxycholic acid or a derivative or a stereoisomer or a salt or a hydrate thereof per kg, or between 0.1 mg and 50 mg of deoxycholic acid or a derivative or a stereoisomer or a salt or a hydrate thereof per kg.

In another embodiment, the consumable product is a dental product and the invention relates to a dental product comprising a sweetener composition of the invention. Dental products include, but are not limited to toothpaste, dental floss, mouthwash, denture adhesive, enamel whitener, fluoride treatments and oral care gels. These products are also known in the art.

In a preferred embodiment the consumable product is toothpaste and the invention relates to toothpaste comprising a sweetener composition of the invention. In addition, the toothpaste may contain further substances including but not limited to abrasive silica, dicalcium phosphate dehydrate, hydrated silica (thickener), ethyl alcohol, peppermint flavor, mint flavor, potassium sorbate, sodium lauryl sulphate, sodium carboxymethylcellulose, sodium monofluorophosphate, sodium monofluorophosphate, sorbitol solution, tetrasodium phosphate and titanium dioxide.

In another embodiment, the consumable product is a cosmetic product and the invention relates to a cosmetic product comprising a sweetener composition of the invention. Cosmetic products include but are not limited to lipstick, lip balm, lip gloss, and petroleum jelly. These products are also known in the art.

In another embodiment, the consumable product is a pharmaceutical product and the invention relates to a pharmaceutical product comprising a sweetener composition of the invention. Pharmaceutical products include but are not limited to over-the-counter and prescription drugs including but not limited to non-tobacco snuff, tobacco substitutes, chewable medications, cough syrups, throat sprays, throat lozenges, cough drops, antibacterial products, pill coatings, gel caplets, soluble fiber preparations, antacids, tablet cores, rapidly absorbed liquid compositions, stable foam compositions, rapidly disintegrating pharmaceutical dosage forms, beverage concentrates for medicinal purposes, aqueous pharmaceutical suspensions, liquid concentrate compositions, and stabilized sorbic acid solutions, phosphate buffers, saline solutions, emulsion, non-aqueous pharmaceutical solvents, aqueous pharmaceutical carriers, solid pharmaceutical carrier, and pharmaceutical preservatives/additives (antimicrobials, antioxidants, chelating agents, inert gases, flavoring agents, coloring agents).

In another embodiment, the consumable product is animal feed or animal food and the invention relates to animal feed or animal food comprising a sweetener composition of the invention.

In another aspect, the invention relates to a method of providing a sweetened consumable of the invention as defined above by admixing a sweetener composition of the invention as defined above or a tabletop sweetener composition of the invention as defined above to a consumable product.

In another aspect, the invention relates to a method of enhancing the taste sensations associated with flavor ingredients by admixing a sweetener composition of the invention as defined above or a tabletop sweetener composition as defined above with one or more flavor ingredients to provide a flavor-enhanced composition or consumable.

The invention, in another embodiment, relates to a method of increasing a sweetness level of a consumable having an initial sweetness level comprising the step of adding to the consumable deoxycholic acid or a derivative or a stereoisomer or a salt or a hydrate thereof or a salt or a hydrate thereof in an amount effective to increase the sweetness level of the consumable to a final sweetness level.

Preferably, deoxycholic acid or a derivative or a stereoisomer or a salt or a hydrate may be used in a comestible composition in a concentration range of from 0.001 wppm to 1 wt.%, more in particular in a range of from 0.01 wppm to 0.1 wt.%, even more in particular in a range of from 0.01 wppm to 0.01 wt.%, even more in particular in a range of from 0.1 wppm to 0.001 wt.%, even more in particular in a range of from 0.01 wppm to 0.001 wt.%, and most particular in a range of from 0.1 wppm to 0.001 wt.%. As used herein, the abbreviation "wppm" refers to weight parts per million.

### Preferred Combinations of Sweeteners and Sweetness Enhancers

deoxycholic acid or a derivative or a stereoisomer or a salt or a hydrate thereof may also be combined with one or more, e.g., two or more or three or more, sweeteners (e.g. one or more sugar(s)) and/or sweetness enhancers in addition to deoxycholic acid or a derivative or a stereoisomer or a salt or a hydrate thereof. In one embodiment, these combinations may be utilized in comestible goods, e.g., to sweeten the respective comestible good.

As used herein, the abbreviation "HSH" refers to hydrogenated starch hydrolyzates. The abbreviation "NHDC" refers to neohesperidine dihydrochalcone". A preferred Acesulfame K commercial product is Sunett®, from Nutrinova.

In some exemplary embodiments, deoxycholic acid or a derivative or a stereoisomer or a salt or a hydrate thereof may be combined with one or more sweetener(s), e.g. sugar(s) and/or sweetness enhancer(s), as shown in Table 1 below. The combinations in this listing are merely exemplary and are not meant to limit the scope of the invention.

**Table 1. Preferred Combinations of Sweeteners - General Overview**

| **Additive 1** | **Additive 2** | **Additive 3** | **Additive 4** | **Additive 5** |
|---|---|---|---|---|
| | **(opt.)** | **(opt.)** | **(opt.)** | **(opt.)** |
| acesulfam K | | | | |
| alitame | | | | |
| aspartame | | | | |
| cyclamate | | | | |
| saccharine | | | | |
| neotame | | | | |
| sucrose | | | | |
| sucralose | | | | |
| fructose | | | | |
| isomalt | | | | |
| polydextrose | | | | |
| oligofructose | | | | |
| sorbitol | | | | |
| HSH | | | | |
| maltitol | | | | |
| alitame | fructose | | | |
| aspartame | fructose | | | |
| aspartame | sucrose | | | |
| aspartame | sucrose | | | |
| aspartame | cyclamate | | | |
| aspartame | NHDC | | | |
| aspartame | saccharine | | | |
| aspartame | alitame | | | |
| aspartame | inulin | | | |
| aspartame | isomalt | | | |
| aspartame | sucralose | | | |
| aspartame | maltol | | | |
| aspartame | maltodextrin | | | |
| cyclamate | sucralose | | | |
| cyclamate | sucrose | | | |
| cyclamate | fructose | | | |
| cyclamate | neotame | | | |
| cyclamate | maltol | | | |
| cyclamate | ethylmaltol | | | |
| saccharine | cyclamate | | | |
| isomalt | oligofructose | | | |
| isomalt | sorbitol | | | |
| isomalt | inulin | | | |
| isomalt | NHDC | | | |
| isomalt | HSH | | | |
| sorbitol | HSH | | | |
| maltitol | HSH | | | |
| sorbitol | polydextrose | | | |
| lactitol | polydextrose | | | |
| sorbitol | xylitol | | | |
| sorbitol | xylitol | | | |
| maltitol | polydextrose | | | |
| maltitol | sorbitol | | | |
| sucrose | fructose | | | |
| sucrose | polydextrin | | | |
| aspartame | sorbitol | polydextrose | | |
| aspartame | saccharin | fructose | | |
| aspartame | saccharin | sucrose | | |
| aspartame | saccharin | cyclamate | | |
| aspartame | cyclamate | fructose | | |
| aspartame | fructose | inulin | | |
| aspartame | sucralose | sucrose | | |
| cyclamate | sucralose | sucrose | | |
| cyclamate | saccharine | sucralose | | |
| cyclamate | neotame | sucrose | | |
| sucrose | maltodextrin | inulin | | |
| isomalt | sorbitol | polydextrose | | |
| isomalt | lactitol | polydextrose | | |
| isomalt | sorbitol | fructose | | |
| maltitol | sorbitol | polydextrose | | |
| isomalt | maltitol | xylitol | | |
| isomalt | maltitol | sorbitol | | |
| aspartame | sucrose | fructose | | |
| polydextrose | sucrose | maltodextrin | | |
| polydextrose | sorbitol | maltodextrin | | |
| dextrose | polydextrose | fructose | | |
| aspartame | cyclamate | saccharine | sucralose | |
| aspartame | sorbitol | polydextrose | sucrose | |
| isomalt | sorbitol | polydextrose | sucrose | |
| isomalt | sorbitol | polydextrose | fructose | |
| acesulfame K | alitame | | | |
| acesulfame K | aspartame | | | |
| acesulfame K | cyclamate | | | |
| acesulfame K | saccharine | | | |
| acesulfame K | neotame | | | |
| acesulfame K | sucrose | | | |
| acesulfame K | sucralose | | | |
| acesulfame K | fructose | | | |
| acesulfame K | isomalt | | | |
| acesulfame K | polydextrose | | | |
| acesulfame K | oligofructose | | | |
| acesulfame K | sorbitol | | | |
| acesulfame K | HSH | | | |
| acesulfame K | maltitol | | | |
| acesulfame K | alitame | fructose | | |
| acesulfame K | aspartame | fructose | | |
| acesulfame K | aspartame | sucrose | | |
| acesulfame K | aspartame | sucrose | | |
| acesulfame K | aspartame | cyclamate | | |
| acesulfame K | aspartame | NHDC | | |
| acesulfame K | aspartame | saccharine | | |
| acesulfame K | aspartame | alitame | | |
| acesulfame K | aspartame | inulin | | |
| acesulfame K | aspartame | isomalt | | |
| acesulfame K | aspartame | sucralose | | |
| acesulfame K | aspartame | maltol | | |
| acesulfame K | aspartame | maltodextrin | | |
| acesulfame K | cyclamate | sucralose | | |
| acesulfame K | cyclamate | sucrose | | |
| acesulfame K | cyclamate | fructose | | |
| acesulfame K | cyclamate | neotame | | |
| acesulfame K | cyclamate | maltol | | |
| acesulfame K | cyclamate | ethylmaltol | | |
| acesulfame K | saccharine | cyclamate | | |
| acesulfame K | isomalt | oligofructose | | |
| acesulfame K | isomalt | sorbitol | | |
| acesulfame K | isomalt | inulin | | |
| acesulfame K | isomalt | NHDC | | |
| acesulfame K | isomalt | HSH | | |
| acesulfame K | sorbitol | HSH | | |
| acesulfame K | maltitol | HSH | | |
| acesulfame K | sorbitol | polydextrose | | |
| acesulfame K | lactitol | polydextrose | | |
| acesulfame K | sorbitol | xylitol | | |
| acesulfame K | maltitol | polydextrose | | |
| acesulfame K | maltitol | sorbitol | | |
| acesulfame K | sucrose | fructose | | |
| acesulfame K | sucrose | polydextrin | | |
| acesulfame K | aspartame | sorbitol | polydextrose | |
| acesulfame K | aspartame | saccharin | fructose | |
| acesulfame K | aspartame | saccharin | sucrose | |
| acesulfame K | aspartame | saccharin | cyclamate | |
| acesulfame K | aspartame | cyclamate | fructose | |
| acesulfame K | aspartame | fructose | inulin | |
| acesulfame K | aspartame | sucralose | sucrose | |
| acesulfame K | cyclamate | sucralose | sucrose | |
| acesulfame K | cyclamate | saccharine | sucralose | |
| acesulfame K | cyclamate | neotame | sucrose | |
| acesulfame K | sucrose | maltodextrin | inulin | |
| acesulfame K | isomalt | sorbitol | polydextrose | |
| acesulfame K | isomalt | lactitol | polydextrose | |
| acesulfame K | isomalt | sorbitol | fructose | |
| acesulfame K | maltitol | sorbitol | polydextrose | |
| acesulfame K | isomalt | maltitol | xylitol | |
| acesulfame K | isomalt | maltitol | sorbitol | |
| acesulfame K | aspartame | sucrose | fructose | |
| acesulfame K | polydextrose | sucrose | maltodextrin | |
| acesulfame K | polydextrose | sorbitol | maltodextrin | |
| acesulfame K | dextrose | polydextrose | fructose | |
| acesulfame K | aspartame | cyclamate | saccharine | sucralose |
| acesulfame K | aspartame | sorbitol | polydextrose | sucrose |
| acesulfame K | isomalt | sorbitol | polydextrose | sucrose |
| acesulfame K | isomalt | sorbitol | polydextrose | fructose |

In other embodiments, deoxycholic acid or a derivative or a stereoisomer or a salt or a hydrate thereof may be combined with one or more, e.g., two or more or three or more, sweetener(s), e.g. sugar(s), and/or sweetness enhancer(s) that are known in the art but are not listed in Table 1. It should be understood that deoxycholic acid or a derivative or a stereoisomer or a salt or a hydrate thereof may, in some embodiments, be combined with at least one of any of the sweetener(s), e.g. sugar(s), and/or sweetness enhancer(s) that are listed in Table 1 and/or with any other sweetener(s), e.g. sugar(s), and/or sweetness enhancer(s) that are known in the art but are not listed in Table 1.

In some embodiments, when deoxycholic acid or a derivative or a stereoisomer or a salt or a hydrate thereof is used with comestible goods such as, e.g., bakery goods, biscuits, cake, other bakery goods, spread, confectionary, delicacies, ice cream, water-based ice, jams, oral hygiene, desserts, or yoghurt, deoxycholic acid or a derivative or a stereoisomer or a salt or a hydrate thereof may be combined with one or more sweetener(s), e.g. sugar(s), and/or sweetness enhancer(s) as follows:
a.) acesulfame K in a concentration range of from 0.01 to 50 g/kg, more preferably from 0.05 to 20 g/kg, even more preferably from 0.1 to 10 g/kg, most preferably of from 0.1 to 8.3 g/kg;
b.) aspartame in a concentration range of from 0.005 to 10 g/kg, more preferably from 0.01 to 7 g/kg, even more preferably from 0.01 to 1 g/kg, most preferably of from 0.06 to 1 g/kg;
c.) cyclamate in a concentration range of from 0.01 to 10.0 g/kg, more preferably from 0.05 to 5 g/kg, even more preferably from 0.1 to 2 g/kg, most preferably of from 0.1 to 1.5 g/kg;
d.) sucralose in a concentration range of from 0.05 to 10 g/kg, more preferably from 0.05 to 5 g/kg, even more preferably from 0.1 to 1 g/kg, most preferably of from 0.1 to 0.36 g/kg;
e.) saccharine in a concentration range of from 0.001 to 20 g/kg, more preferably from 0.001 to 1 g/kg, even more preferably from 0.005 to 0.5 g/kg, most preferably of from 0.03 to 0.15 g/kg;
f.) alitame in a concentration range of from 0.001 to 1 g/kg, more preferably from 0.001 to 0.5 g/kg, even more preferably from 0.005 to 0.1 g/kg, most preferably of from 0.01 to 0.03 g/kg;
g.) NHDC in a concentration range of from 0.0001 to 0.1 g/kg, more preferably from 0.0005 to 0.01 g/kg, even more preferably from 0.001 to 0.01 g/kg, most preferably of from 0.002 to 0.005 g/kg;
h.) sucrose in a concentration range of from 0.1 to 900 g/kg, more preferably from 1 to 500 g/kg, even more preferably from 10 to 500 g/kg, most preferably of from 10 to 300 g/kg;
i.) fructose in a concentration range of from 0.1 to 900 g/kg, more preferably from 1 to 500 g/kg, even more preferably from 5 to 500 g/kg, most preferably of from 5 to 100 g/kg;
j.) isomalt in a concentration range of from 10 to 950 g/kg, more preferably from 20 to 950 g/kg, even more preferably from 40 to 950 g/kg, most preferably of from 50 to 900 g/kg;
k.) maltitol in a concentration range of from 10 to 950 g/kg, more preferably from I 5 to 950 g/kg, even more preferably from 25 to 950 g/kg, most preferably of from 50 to 900 g/kg;
l.) sorbitol in a concentration range of from 5 to 750 g/kg, more preferably from 10 to 500 g/kg, even more preferably from 20 to 500 g/kg, most preferably of from 30 to 300 g/kg;
m.) polydextrose in a concentration range of from 5 to 750 g/kg, more preferably from 10 to 750 g/kg, even more preferably from 20 to 500 g/kg, most preferably of from 30 to 300 g/kg;
n.) HSH in a concentration range of from 5 to 950 g/kg, more preferably from 25 to 800 g/kg, even more preferably from 50 to 750 g/kg, most preferably of from 100 to 650 g/kg;
o.) oligofructose in a concentration range of from 5 to 800 g/kg, more preferably from 25 to 750 g/kg, even more preferably from 50 to 500 g/kg, most preferably of from 70 to 200 g/kg;
p.) inulin in a concentration range of from 5 to 500 g/kg, more preferably from 25 to 250 g/kg, even more preferably from 50 to 100 g/kg, most preferably of from 20 to 70 g/kg;
q.) lactitol in a concentration range of from 5 to 500 g/kg, more preferably from 25 to 250 g/kg, even more preferably from 50 to 100 g/kg, most preferably of from 40 to 60 g/kg;
r.) xylitol in a concentration range of from 5 to 500 g/kg, more preferably from 10 to 250 g/kg, even more preferably from 25 to 100 g/kg, most preferably of from 40 to 300 g/kg; and/or
s.) maltodextrin in a concentration range of from 10 to 500 g/kg, more preferably from 25 to 250 g/kg, even more preferably from 50 to 100 g/kg, most preferably of from 75 to 100 g/kg.

The proposed combinations and concentration ranges listed above are merely exemplary and are not meant to limit the scope of the invention.

In other embodiments, in a liquid comestible good such as, e.g., a drink or a beverage, deoxycholic acid or a derivative or a stereoisomer or a salt or a hydrate thereof may be combined with one or more sweetener(s), e.g. sugar(s), and/or sweetness enhancer(s) as follows:
a.) acesulfame K in a concentration range of from 0.005 to 5 g/l, more preferably from 0.005 to 1 g/1, even more preferably from 0.01 to 0.5 g/1, most preferably of from 0.04 to 0.45 g/l;
b.) aspartame in a concentration range of from 0.005 to 5.0 g/l, more preferably from 0.005 to 1 g/1, even more preferably from 0.01 to 0.5 g/1, most preferably of from 0.03 to 0.26 g/l;
c.) cyclamate in a concentration range of from 0.005 to 10g/l, more preferably from 0.01 to 2 g/1, even more preferably from 0.05 to 1 g/1, most preferably of from 0.2 to 0.7 g/1;
d.) sucralose in a concentration range of from 0.005 to 20 g/l, more preferably from 0.005 to 5 g/1, even more preferably from 0.01 to 2 g/1, most preferably of from 0.01 to 0.77 g/1;
e.) neotame in a concentration range of from 0.0001 to 2 g/1, more preferably from 0.0005 to 0.5 g/1, even more preferably from 0.001 to 0.02 g/1, most preferably of from 0.002 to 0.007 g/1;
f.) alitame in a concentration range of from 0.001 to 20 g/1, more preferably from 0.005 to 0.5 g/1, even more preferably from 0.01 to 0.1 g/l, most preferably of from 0.025 to 0.030 g/1;
g.) sucralose in a concentration range of from 0.001 to 20 g/1, more preferably from 0.001 to 1 g/1, even more preferably from 0.005 to 0.1 g/1, most preferably of from 0.01 to 0.1 g/1;
h.) saccharine in a concentration range of from 0.001 to 20 g/1, more preferably from 0.001 to 1 g/l, even more preferably from 0.005 to 0.2 g/l, most preferably of from 0.03 to 0.09 g/l;
i.) NHCD in a concentration range of from 0.0001 to 0.1 g/l, more preferably from 0.0005 to 0.1 g/1, even more preferably from 0.001 to 0.01 g/1, most preferably of approximately 0.005 g/l;
j.) maltol in a concentration range of from 0.001 to 20 g/1, more preferably from 0.001 1 to 1.0 g/1, even more preferably from 0.005 to 0.2 g/1, most preferably of approximately 0.02 g/l;
k.) ethylmaltol in a concentration range of from 0.0001 to 2 g/1, more preferably from 0.0001 to 0.1 g/1, even more preferably from 0.0005 to 0.002 g/1, most preferably of from 0.007 to 0.020 g/l;
l.) sucrose in a concentration range of from 0.1 to 500 g/1, more preferably from 1 to 100 g/1, even more preferably from 10 to 100 g/1, most preferably of from 15 to 70 g/l; and/or
m.) fructose in a concentration range of from 0.1 to 500 g/1, more preferably from 1 to 100 g/1, even more preferably from 5 to 100 g/1, most preferably of from 10 to 20 g/l.

The proposed combinations and concentration ranges listed above are merely exemplary and are not meant to limit the scope of the invention.

In other embodiments, in a liquid or solid table top sweetener, deoxycholic acid or a derivative or a stereoisomer or a salt or a hydrate thereof may preferably be combined with one or more sweetener(s), e.g. sugar(s), and/or sweetness enhancer(s) as follows:
a.) acesulfame K in a concentration range of from 0.5 to 500 g/kg, more preferably from 1 to 250 g/kg, even more preferably from 5 to 150 g/kg, most preferably of from 5 to 135 g/kg;
b.) aspartame in a concentration range of from 0.5 to 200 g/kg, more preferably from 1 to 100 g/kg, even more preferably from 2 to 50 g/kg, most preferably of from 5 to 30 g/kg;
c.) cyclamate in a concentration range of from 1 to 500 g/kg, more preferably from 5 to 250 g/kg, even more preferably from 10 to 150 g/kg, most preferably of from 30 to 130 g/kg;
d.) sucralose in a concentration range of from 0.1 to 200 g/kg, more preferably from 0.5 to 100 g/kg, even more preferably from 1 to 50 g/kg, most preferably of from 1.5 to 20 g/kg;
e.) saccharin in a concentration range of from 0.1 to 200 g/kg, more preferably from 0.5 to 100 g/kg, even more preferably from 1 to 50 g/kg, most preferably of from 3 to 10 g/kg;
f.) NHCD in a concentration range of from 0.1 to 200 g/kg, more preferably from 0.5 to 100 g/kg, even more preferably from 1 to 50 g/kg, most preferably of from 1 to 5 g/kg;
g.) dextrose in a concentration range above 100 g/kg, more preferably above 250 g/kg, even more preferably above 500 g/kg, most preferably above 900 g/kg;
h.) maltodextrin in a concentration range above 100 g/kg, more preferably above 250 g/kg, even more preferably above 500 g/kg, most preferably above 900 g/kg;
i.) lactose in a concentration range above 50 g/kg, more preferably above 100 g/kg, even more preferably above 500 g/kg, most preferably above 800 g/kg.

The proposed combinations and concentration ranges listed above are merely exemplary and are not meant to limit the scope of the invention.

In other embodiments, when deoxycholic acid or a derivative or a stereoisomer or a salt or a hydrate thereof is used with comestible goods, deoxycholic acid or a derivative or a stereoisomer or a salt or a hydrate thereof may be combined with one or more, e.g., two or more or three or more, sweetener(s), e.g. sugar(s), and/or sweetness enhancer(s) that are known in the art but are not listed above. It should be understood that deoxycholic acid or a derivative or a stereoisomer or a salt or a hydrate thereof may, in some embodiments, be combined with at least one of any of the sweetener(s), e.g. sugar(s), and/or sweetness enhancer(s) that are listed above and/or with any other sweetener(s), e.g. sugar(s), and/or sweetness enhancer(s) that are known in the art.

In other embodiments, deoxycholic acid or a derivative or a stereoisomer or a salt or a hydrate thereof, when used as an additive in a comestible good such as, e.g., bakery goods, biscuits, cake, other bakery goods, spread, confectionary, delicacies, ice cream, water-based ice, jams, oral hygiene, desserts, or yoghurt, may be combined with sweetener(s), e.g. sugar(s), and/or sweetness enhancer(s) as shown in Table 2 below. The combinations in Table 2 are merely exemplary and are not meant to limit the scope of the invention.

**Table 2. Mass ranges - Solid and Semi-Solid Compositions**

| **Additive 1** | **Additive 2** | **Additive 3** | **Additive 4** | **Additive 5** |
|---|---|---|---|---|
| | **(opt.)** | **(opt.)** | **(opt.)** | **(opt.)** |
| acesulfame K: | | | | |
| 0.8-2 g/kg | | | | |
| alitame: | | | | |
| 0.01-1.0 g/kg | | | | |
| aspartame: | | | | |
| 0.16-6.2 g/kg | | | | |
| cyclamate: | | | | |
| 0.1-10 g/kg | | | | |
| saccharine: | | | | |
| 0.1-10 g/kg | | | | |
| sucrose: | | | | |
| 1-100 g/kg | | | | |
| sucralose: | | | | |
| 0.10-0.36 g/kg | | | | |
| fructose: | | | | |
| 1-100 g/kg | | | | |
| isomalt: | | | | |
| 144.92-881.3 g/kg | | | | |
| isomalt: | | | | |
| 144.92-881.3 g/kg | | | | |
| polydextrose: | | | | |
| 10-500 g/kg | | | | |
| oligofructose: | | | | |
| 10-500 g/kg | | | | |
| sucralose: | | | | |
| 0.1-10 g/kg | | | | |
| sorbitol | | | | |
| 280.7-979.0 g/kg | | | | |
| HSH: | | | | |
| 796.8-981.0 g/kg | | | | |
| maltitol: | | | | |
| 851.0-851.1 g/kg | | | | |
| alitame: | fructose: | | | |
| 0.01-1 g/kg | 1-100 g/kg | | | |
| aspartame: | fructose: | | | |
| 0.10-0.16 g/kg | 8.0-10.0 g/kg | | | |
| aspartame: | sucrose: | | | |
| 0.10-0.3 g/kg | 20.0-225.0 g/kg | | | |
| aspartame: | cyclamate | | | |
| 0.14-0.28 g/kg | 0.12-1.2 g/kg | | | |
| aspartame: | NHDC: | | | |
| 0.15-0.18 g/kg | 0.002-0.005 g/kg | | | |
| aspartame: | saccharine: | | | |
| 0.06-0.14 g/kg | 0.03-0.08 g/kg | | | |
| aspartame: | alitame: | | | |
| 0.01-1 g/kg | 0.001-1 g/kg | | | |
| aspartame: | inulin: | | | |
| 0.01-1 g/kg | 1-100 g/kg | | | |
| aspartame: | isomalt: | | | |
| 0.01-10 g/kg | 10-1000 g/kg | | | |
| aspartame: | sucralose: | | | |
| 0.01-10 g/kg | 0.01-1 g/kg | | | |
| cyclamate: | fructose: | | | |
| 0.01-10 g/kg | 10-20.0 g/kg | | | |
| cyclamate: | sucralose: | | | |
| 0.1-10 g/kg | 0.01-1 g/kg | | | |
| isomalt: | oligofructose: | | | |
| 72.46-93.5 g/kg | 72.46-93.5 g/kg | | | |
| sorbitol: | polydextrose: | | | |
| 1-500 g/kg | 10-1000 g/kg | | | |
| lactitol: | polydextrose: | | | |
| 1-500 g/kg | 10-1000 g/kg | | | |
| maltitol: | polydextrose: | | | |
| 34.0-135.2 g/kg | 33.0-134.4 g/kg | | | |
| maltitol: | sorbitol: | | | |
| 199.8-266.7 g/kg | 176.0-281.3 g/kg | | | |
| isomalt: | polydextrose: | | | |
| 33.8-476.0 g/kg | 33.6-315.7 g/kg | | | |
| isomalt: | inulin: | | | |
| 1-500 g/kg | 10-1000 g/kg | | | |
| isomalt: | sorbitol: | | | |
| 1-500 g/kg | 10-1000 g/kg | | | |
| isomalt: | HSH: | | | |
| 10-1000 g/kg | 10-1000 g/kg | | | |
| sorbitol: | HSH: | | | |
| 56.3-75.6 g/kg | 482.1-639.5 g/kg | | | |
| maltitol: | HSH: | | | |
| 100-5000 g/kg | 10-1000 g/kg | | | |
| sorbitol: | xylitol: | | | |
| 10-1000 g/kg | 10-1000 g/kg | | | |
| isomalt: | xylitol: | | | |
| 345.0-400.7 g/kg | 40.0-41.0 g/kg | | | |
| isomalt: | NHDC: | | | |
| 10-1000 g/kg | 0.001-1 g/kg | | | |
| sucrose: | fructose | | | |
| 10-1000 g/kg | 10-1000 g/kg | | | |
| sucrose: | maltodextrin: | | | |
| 10-1000 g/kg | 10-1000 g/kg | | | |
| sucrose: | polydextrose: | | | |
| 10-1000 g/kg | 10-1000 g/kg | | | |
| aspartam: | sorbitol: | polydextrose: | | |
| 0.25-0.55 g/kg | 10-1000 g/kg | 159.0-160.0 g/kg | | |
| aspartame: | saccharine: | fructose: | | |
| 0.01-1 g/kg | 0.1-10 g/kg | 1-1000 g/kg | | |
| aspartame: | saccharine: | sucrose: | | |
| 0.06-0.09 g/kg | 0.03-0.08 g/kg | 1-1000 g/kg | | |
| aspartame: | cyclamate: | fructose: | | |
| 0.01-1 g/kg | 0.1-10 g/kg | 1-1000 g/kg | | |
| aspartame: | isomalt: | polydextrose: | | |
| 0.01-1 g/kg | 1-100 g/kg | 1-1000 g/kg | | |
| aspartame: | sucrose: | fructose: | | |
| 0.01-1 g/kg | 10-1000 g/kg | 1-1000 g/kg | | |
| isomalt: | sorbitol: | fructose: | | |
| 1-500 g/kg | 10-1000 g/kg | 1-1000 g/kg | | |
| isomalt: | sorbitol: | polydextrose: | | |
| 63.8-344.6 g/kg | 31.9-51.7 g/kg | 53.9-170.2 g/kg | | |
| isomalt: | lactitol: | polydextrose: | | |
| 1-500 g/kg | 10-1000. g/kg | 1-1000 g/kg | | |
| isomalt: | polydextrose: | inulin: | | |
| 10-1000 g/kg | 10-1000 g/kg | 1-1000 g/kg | | |
| isomalt: | maltitol: | xylitol: | | |
| 10-1000 g/kg | 10-1000 g/kg | 1-1000 g/kg | | |
| dextrose: | polydextrose: | fructose: | | |
| 1-500 g/kg | 10-1000 g/kg | 1-1000 g/kg | | |
| polydextrose: | sucrose: | maltodextrin: | | |
| 1-1000 g/kg | 10-1000 g/kg | 1-1000 g/kg | | |
| polydextrose: | sorbitol: | maltodextrin: | | |
| 10-1000 g/kg | 10-1000 g/kg | 1-1000 g/kg | | |
| polydextrose: | maltitol: | HSH: | | |
| 203.6-296.8 g/kg | 10-1000 g/kg | 226.0-340.0 g/kg | | |
| aspartame: | sorbitol: | polydextrose: | sucrose: | |
| 0.01-1 g/kg | 10-1000 g/kg | 1-1000 g/kg | 10-1000 g/kg | |
| isomalt: | sorbitol: | polydextrose: | sucrose: | |
| 1-500 g/kg | 1-1000 g/kg | 1-1000 g/kg | 10-1000 g/kg | |
| isomalt: | sorbitol: | polydextrose: | fructose: | |
| 1-500 g/kg | 1-100 g/kg | 1-1000 g/kg | 10-1000 g/kg | |
| acesulfame K: | alitame: | | | |
| 0.01-1 g/kg | 0.01-1 g/kg | | | |
| acesulfame K: | aspartame: | | | |
| 0.16-6.2 g/kg | 0.16-6.2 g/kg | | | |
| acesulfame K: | cyclamate: | | | |
| 0.25-0.5 g/kg | 0.01-10 g/kg | | | |
| acesulfame K: | saccharine: | | | |
| 0.01-1 g/kg | 0.1-1 g/kg | | | |
| acesulfame K: | sucrose: | | | |
| 0.01-1 g/kg | 1-100 g/kg | | | |
| acesulfame K: | sucralose: | | | |
| 0.32-0.92 g/kg | 0.10-0.36 g/kg | | | |
| acesulfame K: | fructose: | | | |
| 0.01-1 g/kg | 1-100 g/kg | | | |
| acesulfame K: | isomalt: | | | |
| 0.1-2 g/kg | 144.92-881.3 g/kg | | | |
| acesulfame K: | isomalt: | | | |
| 0.1-2 g/kg | 144.92-881.3 g/kg | | | |
| acesulfame K: | polydextrose: | | | |
| 0.01-1 g/kg | 1-1000 g/kg | | | |
| acesulfame K: | oligofructose: | | | |
| 1-10 g/kg | 1-1000 g/kg | | | |
| acesulfame K: | sucralose: | | | |
| 0.27 g/kg | 0.01-10 g/kg | | | |
| acesulfame K: | sorbitol | | | |
| 0.01-1 g/kg | 280.7-979.0 g/kg | | | |
| acesulfame K: | HSH: | | | |
| 1.5-1.6 g/kg | 796.8-981.0 g/kg | | | |
| acesulfame K: | maltitol: | | | |
| 0.3-0.4 g/kg | 851.0-851.1 g/kg | | | |
| acesulfame K: | alitame: | fructose: | | |
| 0.01-1 g/kg | 0.001-1 g/kg | 0.1-100 g/kg | | |
| acesulfame K: | aspartame: | fructose: | | |
| 0.13-0.20 g/kg | 0.10-0.16 g/kg | 8.0-10.0 g/kg | | |
| acesulfame K: | aspartame: | sucrose: | | |
| 0.12-0.3 g/kg | 0.10-0.3 g/kg | 20.0-225.0 g/kg | | |
| acesulfame K: | aspartame: | cyclamate | | |
| 0.14-0.67 g/kg | 0.14-0.28 g/kg | 0.12-1.2 g/kg | | |
| acesulfame K: | aspartame: | NHDC: | | |
| 0.15-0.18 g/kg | 0.15-0.18 g/kg | 0.002-0.005 g/kg | | |
| acesulfame K: | aspartame: | saccharine: | | |
| 0.06-0.14 g/kg | 0.06-0.14 g/kg | 0.03-0.08 g/kg | | |
| acesulfame K: | aspartame: | alitame: | | |
| 0.01-1 g/kg | 0.01-1 g/kg | 0.001-1 g/kg | | |
| acesulfame K: | aspartame: | inulin: | | |
| 0.01-1 g/kg | 0.01-10 g/kg | 1-1000 g/kg | | |
| acesulfame K: | aspartame: | isomalt | | |
| 0.01-1 g/kg | 0.01-1 g/kg | 10-1000 g/kg | | |
| acesulfame K: | aspartame: | sucralose: | | |
| 1-10 g/kg | 0.01-1 g/kg | 0.01-1 g/kg | | |
| acesulfame K: | cyclamate: | fructose: | | |
| 0.20-0.35 g/kg | 0.01-1 g/kg | 10-20.0 g/kg | | |
| acesulfame K: | cyclamate: | sucralose: | | |
| 0.1-10 g/kg | 0.1-10 g/kg | 0.01-1 g/kg | | |
| acesulfame K: | isomalt: | oligofructose: | | |
| 0.1-1 g/kg | 72.46-93.5 g/kg | 72.46-93.5 g/kg | | |
| acesulfame K: | sorbitol: | polydextrose: | | |
| 0.1-1 g/kg | 10-1000 g/kg | 10-1000 g/kg | | |
| acesulfame K: | lactitol: | polydextrose: | | |
| 0.1-1 g/kg | 10-1000 g/kg | 10-1000 g/kg | | |
| acesulfame K: | maltitol: | polydextrose: | | |
| 0.1-10 g/kg | 34.0-135.2 g/kg | 33.0-134.4 g/kg | | |
| acesulfame K: | maltitol: | sorbitol: | | |
| 0.1-10 g/kg | 199.8-266.7 g/kg | 176.0-281.3 g/kg | | |
| acesulfame K: | isomalt: | polydextrose: | | |
| 0.65-3.2 g/kg | 33.8-476.0 g/kg | 33.6-315.7 g/kg | | |
| acesulfame K: | isomalt: | inulin: | | |
| 0.1-10 g/kg | 10-1000 g/kg | 10-1000 g/kg | | |
| acesulfame K: | isomalt: | sorbitol: | | |
| 0.1-10 g/kg | 10-1000 g/kg | 10-1000 g/kg | | |
| acesulfame K: | isomalt: | HSH: | | |
| 1-10 g/kg | 10-2000 g/kg | 10-1000 g/kg | | |
| acesulfame K: | sorbitol: | HSH: | | |
| 0.4-1.4 g/kg | 56.3-75.6 g/kg | 10-1000 g/kg | | |
| acesulfame K: | maltitol: | HSH: | | |
| 0.1-1 g/kg | 100-10000 g/kg | 10-1000 g/kg | | |
| acesulfame K: | sorbitol: | xylitol: | | |
| 0.1-1 g/kg | 10-1000 g/kg | 10-1000 g/kg | | |
| acesulfame K: | isomalt: | xylitol: | | |
| 0.1-1 g/kg | 345.0-400.7 g/kg | 40.0-41.0 g/kg | | |
| acesulfame K: | isomalt: | NHDC: | | |
| 0.1-1 g/kg | 100-10000 g/kg | 0.001-1 g/kg | | |
| acesulfame K: | sucrose: | fructose: | | |
| 1-10 g/kg | 10-1000 g/kg | 1-1000 g/kg | | |
| acesulfame K: | sucrose: | maltodextrin: | | |
| 1-10 g/kg | 10-1000 g/kg | 10-1000 g/kg | | |
| acesulfame K: | sucrose: | polydextrose: | | |
| 1-10 g/kg | 10-1000 g/kg | 10-1000 g/kg | | |
| acesulfame K: | aspartam: | sorbitol: | polydextrose: | |
| 0.25-0.55 g/kg | 0.25-0.55 g/kg | 10-1000 g/kg | 159.0-160.0 g/kg | |
| acesulfame K: | aspartame: | saccharine: | fructose: | |
| 0.01-1 g/kg | 0.01-1 g/kg | 0.001-10 g/kg | 1-1000 g/kg | |
| acesulfame K: | aspartame: | saccharine: | sucrose: | |
| 0.06-0.09 g/kg | 0.06-0.09 g/kg | 0.001-10 g/kg | 1-1000 g/kg | |
| acesulfame K: | aspartame: | cyclamate: | fructose: | |
| 0.01-1 g/kg | 0.01-1 g/kg | 0.01-1 g/kg | 1-1000 g/kg | |
| acesulfame K: | aspartame: | isomalt: | polydextrose: | |
| 0.01-1 g/kg | 0.01-1 g/kg | 0.01-1 g/kg | 1-1000 g/kg | |
| acesulfame K: | aspartame: | sucrose: | fructose: | |
| 0.01-1 g/kg | 0.01-1 g/kg | 10-1000 g/kg | 10-1000 g/kg | |
| acesulfame K: | isomalt: | sorbitol: | fructose: | |
| 0.01-1 g/kg | 10-1000 g/kg | 10-1000 g/kg | 10-1000 g/kg | |
| acesulfame K: | isomalt: | sorbitol: | polydextrose: | |
| 0.7-1.2 g/kg | 63.8-344.6 g/kg | 31.9-51.7 g/kg | 53.9-170.2 g/kg | |
| acesulfame K: | isomalt: | lactitol: | polydextrose: | |
| 0.1-1 g/kg | 10-1000 g/kg | 10-1000. g/kg | 1-1000 g/kg | |
| acesulfame K: | isomalt: | polydextrose: | inulin: | |
| 1-10 g/kg | 10-1000 g/kg | 10-1000 g/kg | 1-1000 g/kg | |
| acesulfame K: | isomalt: | maltitol: | xylitol: | |
| 0.01-1 g/kg | 10-1000 g/kg | 10-1000 | 10-1000 g/kg | |
| acesulfame K: | dextrose: | polydextrose: | fructose: | |
| 1-10 g/kg | 10-1000 g/kg | 10-1000 g/kg | 10-1000 g/kg | |
| acesulfame K: | polydextrose: | sucrose: | maltodextrin: | |
| 1-10 g/kg | 10-1000 g/kg | 10-1000 g/kg | 10-1000 g/kg | |
| acesulfame K: | polydextrose: | sorbitol: | maltodextrin: | |
| 1-10 g/kg | 10-1000 g/kg | 10-1000 g/kg | 10-1000 g/kg | |
| acesulfame K: | polydextrose: | maltitol: | HSH: | |
| 1.8-8.3 g/kg | 203.6-296.8 g/kg | 10-1000 g/kg | 226.0-340.0 g/kg | |
| acesulfame K: | aspartame: | sorbitol: | polydextrose: | sucrose: |
| 0.01-1 g/kg | 0.01-1 g/kg | 10-1000 g/kg | 10-1000 g/kg | 10-1000 g/kg |
| acesulfame K: | isomalt: | sorbitol: | polydextrose: | sucrose: |
| 0.1-10 g/kg | 10-1000 g/kg | 10-1000 g/kg | 10-1000 g/kg | 10-1000 g/kg |
| acesulfame K: | isomalt: | sorbitol: | polydextrose: | fructose: |
| 0.1-10 g/kg | 10-1000 g/kg | 10-1000 g/kg | 10-1000 g/kg | 10-1000 g/kg |

In other embodiments, deoxycholic acid or a derivative or a stereoisomer or a salt or a hydrate thereof, when used as an additive in a beverage or a drink, may be combined with sweetener(s), e.g. sugar(s), and/or sweetness enhancer(s) as shown in Table 3 below. The combinations in Table 3 are merely exemplary and are not meant to limit the scope of the invention.

**Table 3. Mass ranges - Beverages and Drinks**

| **Additive 1** | **Additive 2** | **Additive 3** | **Additive 4** | **Additive 5** |
|---|---|---|---|---|
| | **(opt.)** | **(opt.)** | **(opt.)** | **(opt.)** |
| aspartame: | | | | |
| 0.04-0.26 g/l | | | | |
| cyclamate: | | | | |
| 0.28-0.72 g/l | | | | |
| sucrose: | | | | |
| 40.0-70.0 g/l | | | | |
| sucralose: | | | | |
| 0.073-0.77 g/l | | | | |
| neotame: | | | | |
| 0.006-0.007 g/l | | | | |
| alitame: | | | | |
| 0.025-0.030 g/l | | | | |
| aspartame: | sucralose: | | | |
| 0.09-0.13 g/l | 0.01-0.06 g/l | | | |
| aspartame: | cyclamate: | | | |
| 0.04-0.10 g/l | 0.22-0.40 g/l | | | |
| aspartame: | saccharine: | | | |
| 0.09-0.18 g/l | 0.03-0.08 g/l | | | |
| aspartame: | fructose: | | | |
| 0.04-0.13 g/l | 10.0-20.0 g/l | | | |
| aspartame: | sucrose: | | | |
| 0.06-0.16 g/l | 20.0-65.0 g/l | | | |
| aspartame: | NHDC: | | | |
| 0.06-0.13 g/l | 0.0001-1 g/l | | | |
| aspartame: | maltol: | | | |
| 0.13-0.16 g/l | 0.001-1 g/l | | | |
| cyclamate: | sucralose: | | | |
| 0.2-0.4 g/l | 0.03-0.10 g/l | | | |
| cyclamate: | sucrose: | | | |
| 0.09-0.17 g/l | 10.0-35.0 g/l | | | |
| cyclamate: | saccharine: | | | |
| 0.28-0.40 g/l | 0.04-0.09 g/l | | | |
| cyclamate: | neotame: | | | |
| 0.43-0.44 g/l | 0.003-0.005 g/l | | | |
| cyclamate: | maltol: | | | |
| 0.01-1 g/l | 0.001-1 g/l | | | |
| cyclamate: | ethylmaltol: | | | |
| 0.08-0.40 g/l | 0.007-0.020 g/l | | | |
| sucralose: | sucrose: | | | |
| 0.01-1 g/l | 10-1000 g/l | | | |
| aspartame: | saccharine: | cyclamate: | | |
| 0.01-0.07 g/l | 0.02-0.09 g/l | 0.15-0.41 g/l | | |
| aspartame: | saccharine: | sucrose: | | |
| 0.08-0.13 g/l | 0.03-0.05 g/l | 15.0-30.0 g/l | | |
| aspartame: | sucralose: | sucrose: | | |
| 0.01-1 g/l | 0.001-1 g/l | 10-1000 g/l | | |
| cyclamate: | sucralose: | sucrose: | | |
| 0.01-1 g/l | 0.001-1 g/l | 10-1000 g/l | | |
| cyclamate: | saccharine: | sucralose: | | |
| 0.01-1 g/l | 0.03-0.09 g/l | 0.04-0.08 g/l | | |
| cyclamate: | neotame: | sucrose: | | |
| 0.01-1 9/1 | 0.0001-1 g/l | 10-1000 g/l | | |
| aspartame: | cyclamate: | saccharine: | sucralose: | |
| 0.01-1 9/1 | 0.01-1 g/l | 0.001-1 g/l | 0.001-1 g/l | |
| acesulfame K: | | | | |
| 0.20-0.45 g/l | | | | |
| acesulfame K: | aspartame: | | | |
| 0.07-0.28 g/l | 0.04-0.26 g/l | | | |
| acesulfame K: | cyclamate: | | | |
| 0.07-0.20 g/l | 0.28-0.72 g/l | | | |
| acesulfame K: | sucrose: | | | |
| 0.15-0.32 g/l | 40.0-70.0 g/l | | | |
| acesulfame K: | sucralose: | | | |
| 0.10-0.25 g/l | 0.073-0.77 g/l | | | |
| acesulfame K: | neotame: | | | |
| 0.15-0.24 g/l | 0.006-0.007 g/l | | | |
| acesulfame K: | alitame: | | | |
| 0.15-0.20 g/l | 0.025-0.030 g/l | | | |
| acesulfame K: | aspartame: | sucralose: | | |
| 0.09-0.19 g/l | 0.09-0.13 g/l | 0.01-0.06 g/l | | |
| acesulfame K: | aspartame: | cyclamate: | | |
| 0.04-0.10 g/l | 0.04-0.10 g/l | 0.22-0.40 g/l | | |
| acesulfame K: | aspartame: | saccharine: | | |
| 0.06-0.14 g/l | 0.09-0.18 g/l | 0.03-0.08 g/l | | |
| acesulfame K: | aspartame: | fructose: | | |
| 0.12-0.13 g/l | 0.04-0.13 g/l | 10.0-20.0 g/l | | |
| acesulfame K: | aspartame: | sucrose: | | |
| 0.06-0.13 g/l | 0.06-0.16 g/l | 20.0-65.0 g/l | | |
| acesulfame K: | aspartame: | NHDC: | | |
| 0.08-0.15 g/l | 0.06-0.13 g/l | 0.0001-1 g/l | | |
| acesulfame K: | aspartame: | maltol: | | |
| 0.13-0.16 g/l | 0.13-0.16 g/l | 0.0001-1 g/l | | |
| acesulfame K: | cyclamate: | sucralose: | | |
| 0.09-0.13 g/l | 0.2-0.4 g/l | 0.03-0.10 g/l | | |
| acesulfame K: | cyclamate: | sucrose: | | |
| 0.07-0.09 g/l | 0.09-0.17 g/l | 10.0-35.0 g/l | | |
| acesulfame K: | cyclamate: | saccharine: | | |
| 0.05-0.26 g/l | 0.28-0.40 g/l | 0.04-0.09 g/l | | |
| acesulfame K: | cyclamate: | neotame: | | |
| 0.21-0.29 g/l | 0.43-0.44 g/l | 0.003-0.005 g/l | | |
| acesulfame K: | cyclamate: | maltol: | | |
| 0.01-1 g/l | 0.01-10 g/l | 0.001-1 g/l | | |
| acesulfame K: | cyclamate: | ethylmaltol: | | |
| 0.08-0.20 g/l | 0.08-0.40 g/l | 0.007-0.020 g/l | | |
| acesulfame K: | sucralose: | sucrose: | | |
| 0.01-1 g/l | 0.01-1 g/l | 10-1000 g/l | | |
| acesulfame K: | aspartame: | saccharine: | cyclamate: | |
| 0.01-0.07 g/l | 0.01-0.07 g/l | 0.02-0.09 g/l | 0.15-0.41 g/l | |
| acesulfame K: | aspartame: | saccharine: | sucrose: | |
| 0.08-0.13 g/l | 0.08-0.13 g/l | 0.03-0.05 g/l | 15.0-30.0 g/l | |
| acesulfame K: | aspartame: | sucralose: | sucrose: | |
| 0.01-1 g/l | 0.01-1 g/l | 0.001-1 g/l | 10-1000 g/l | |
| acesulfame K: | cyclamate: | sucralose: | sucrose: | |
| 0.01-1 g/l | 0.01-1 g/l | 0.001-1 g/l | 10-1000 g/l | |
| acesulfame K: | cyclamate: | saccharine: | sucralose: | |
| 0.015-0.1 g/l | 0.01-1 g/l | 0.03-0.09 g/l | 0.04-0.08 g/l | |
| acesulfame K: | cyclamate: | neotame: | sucrose: | |
| 0.01-1 g/l | 0.01-1 g/l | 0.00001-1 g/l | 10-1000 g/l | |
| acesulfame K: | aspartame: | cyclamate: | saccharine: | sucralose: |
| 0.01-1 g/l | 0.01-1 g/l | 0.01-10 g/l | .0001-1 g/l | 0.001-1 g/l |

In other embodiments, deoxycholic acid or a derivative or a stereoisomer or a salt or a hydrate thereof when used as table top sweetener, may be combined with sweetener(s), e.g. sugar(s) and/or sweetness enhancer(s) as shown in Table 4 below. The combinations in Table 4 are merely exemplary and are not meant to limit the scope of the invention.

**Table 4. Mass ranges - Table Top Sweeteners**

| **Additive 1** | **Additive 2** | **Additive 3** | **Additive 4** |
|---|---|---|---|
| | **(opt.)** | **(opt.)** | **(opt.)** |
| acesulfame K: | | | |
| 6.7-134.0 g/kg | | | |
| aspartame: | | | |
| 5.0-22.0 g/kg | | | |
| cyclamate: | | | |
| 28.0-120.0 g/kg | | | |
| lactose: | | | |
| 100-900.0 g/kg | | | |
| sucralose: | | | |
| 9.6-20.0 g/kg | | | |
| saccharin: | cyclamate: | | |
| 1-100 g/kg | 10-1000 g/kg | | |
| saccharin: | maltodextrin: | | |
| 13.0-20.0 g/kg | 100-10000 g/kg | | |
| aspartame: | dextrose | | |
| 1-100 g/kg | 100-10000 g/kg | | |
| sucralose: | dextrose | | |
| 3.4-5.0 g/kg | 984.1-982.5 g/kg | | |
| aspartame: | NHDC: | lactose: | |
| 1-100 g/kg | 1-100 g/kg | 10-10000 g/kg | |
| aspartame: | cyclamate: | lactose: | |
| 1-100 g/kg | 10-1000 g/kg | 10-10000 g/kg | |
| aspartame: | sucralose: | dextrose: | |
| 1-100 g/kg | 1.7-2.5 g/kg | 979.6-978.8 g/kg | |
| aspartame: | cyclamate: | maltodextrin: | |
| 1-100 g/kg | 1-1000 g/kg | 10-10000 g/kg | |
| saccharin: | cyclamate: | maltodextrin: | |
| 3.3-5.0 g/kg | 28.0-57.0 g/kg | 932.2-974.0 g/kg | |
| acesulfame K: | aspartame: | | |
| 24.0-110.0 g/kg | 5.0-22.0 g/kg | | |
| acesulfame K: | cyclamate: | | |
| 1-100 g/kg | 10-1000 g/kg | | |
| acesulfame K: | lactose: | | |
| 10-1000 g/kg | 100-10000 g/kg | | |
| acesulfame K: | sucralose: | | |
| 12.0-24.0 g/kg | 9.6-20.0 g/kg | | |
| acesulfame K: | saccharin: | cyclamate: | |
| 1-100 g/kg | 1-100 g/kg | 10-1000 g/kg | |
| acesulfame K: | saccharin | maltodextrin: | |
| 10.0-13.0 g/kg | 13.0-20.0 g/kg | 970-974 g/kg | |
| acesulfame K: | aspartame: | dextrose | |
| 1-100 g/kg | 1-100 g/kg | 10-10000 g/kg | |
| acesulfame K: | sucralose: | dextrose | |
| 1-100 g/kg | 3.4-5.0 g/kg | 984.1-982.5 g/kg | |
| acesulfame K: | aspartame: | NHDC: | lactose: |
| 1-100 g/kg | 1-100 g/kg | 0. 1-100 g/kg | 10-10000 g/kg |
| acesulfame K: | aspartame: | cyclamate: | lactose: |
| 1-100 g/kg | 1-100 g/kg | 10-1000 g/kg | 10-10000 g/kg |
| acesulfame K: | aspartame: | sucralose: | dextrose: |
| 1-100 g/kg | 1-100 g/kg | 1.7-2.5 g/kg | 100-10000 g/kg |
| acesulfame K: | aspartame: | 10-1000 g/kg | maltodextrin: |
| 1-100 g/kg | 1-100 g/kg | | 10-10000 g/kg |
| acesulfame K: | saccharin: | cyclamate: | maltodextrin: |
| 7.2-10.0 g/kg | 3.3-5.0 g/kg | 28.0-57.0 g/kg | 10-10000 g/kg |

In other embodiments, when deoxycholic acid or a derivative or a stereoisomer or a salt or a hydrate thereof is used with comestible goods, deoxycholic acid or a derivative or a stereoisomer or a salt or a hydrate thereof may be combined with one or more, e.g., two or more or three or more, sweetener(s), e.g. sugar(s), and/or sweetness enhancer(s) that are known in the art but are not listed above in Tables 2-4. It should be understood that deoxycholic acid or a derivative or a stereoisomer or a salt or a hydrate thereof may, in some embodiments, be combined with at least one of any of the sweetener(s), e.g. sugar(s), and/or sweetness enhancer(s) that are listed above in Tables 2-4 and/or with any other sweetener(s), e.g. sugar(s), and/or sweetness enhancer(s) that are known in the art but are not listed in Tables 2-4.

### Examples

The following examples as well as the accompanying figures provide illustrative embodiments of the inventions described and claimed herein. These examples are not intended to provide any limitation on the scope of the invented subject-matter.

### Example 1: In vitro identification of deoxycholic acid as a sweet taste modulating substance - Detection of sweetness enhancer activity of deoxycholic acid in a recombinant human taste receptor T1R2/T1R3 dependent cell based assay

Deoxycholic acid has been identified in the screening phase as a sweet taste modulating substance by cell based assay analysis, acting as a fructose enhancer *in vitro.*

### 1.1 Description of the general method

In wild type taste cells, e.g. in the human taste buds, signal transduction is accomplished by the G-proteins gustducin and/or by G-Proteins of the G alpha-i type. Encountering sweet ligands, the heterodimeric human taste receptor T1R2/T1R3 reacts with induction of second messenger molecules, namely either the increase of the cAMP level in response to most sugars or the increase of the calcium level in response to most artificial sweeteners (Margolskee, 2002; J. Biol Chem. 277, 1-4, which is incorporated by reference in its entirety).

To analyze the function and activity of a test compound, e.g. of deoxycholic acid, the heterodimeric hT1R2/hT1R3 sweet taste receptor is utilized in a calcium dependent cell based assay. T1R type taste receptors are transfected with the multicistronic plasmid vector pTrix-Eb-R2R3 in a HEK293 cell line stably expressing the promiscuous mouse G-alpha-15 G-protein.

For the generation of stable cell lines a multicistronic expression unit using human taste receptor sequences is used. In a tricistronic expression unit of the expression vector pTrix-Eb-R2R3 is under the control of the human elongation factor 1 alpha promoter. Using standard cloning techniques the cDNA for the receptors ht1R2 and ht1R3 and the cDNA for the blasticidin S deaminase gene is cloned. To enable the translation initiation of each gene of this tricistronic unit two EMC-virus derived internal ribosomal entry sites (IRES - also termed Cap-independent translation enhancer (CITE)) are inserted (Jackson et al., Trends Biochem Sci (1990) 15, 477-83; Jang et al., J Virol (1988) 62, 2636-43, which are incorporated by reference in their entirety).

The tricistronic expression unit is terminated by a simian virus 40 polyadenylation signal sequence. This composition permits the simultaneous expression of all three genes under the control of only one promoter. In contrast to monocistronic transcription units, which integrate independently from each other into different chromosomal locations during the process of stable cell line development, the tricistronic transcription unit integrates all containing genes in one and the same chromosomal locus. Due to the alignment of the genes, the blasticidin S deaminase gene is only transcribed in case a full length transcription takes place. Moreover the polarity of multicistronic transcription units (Moser, S. et al., Biotechnol Prog (2000) 16, 724-35, which is incorporated by reference in its entirety) leads probably to a balanced stoichiometry of the receptor genes and their expression rates in the range of 1:0.7 up to 1:1 for the first two positions whereas the blasticidin S deaminase gene compared to the receptor genes in the third position is expressed to a lesser extend.

Assuming that for the functional heterodimeric receptor ht1R2/ht1R3 a 1:1 stoichiometry is needed the lesser polarity effects for the receptor genes promote the desired stoichiometry whereas the reduced expression of the deaminase promotes an integration locus with enhanced transcriptional activity. Generation of stable hT1R2/hT1R3 expressing cells are performed by culturing the transfected cells in the presence of blasticidine.

For measurement of human T1R2/T1R3 taste receptor dependent activity a control cell line without sweet receptor based on HEK 293 and a cell line expressing the sweet receptor hT1R2/hT1R3 based on HEK 293, respectively, are seeded into assay plates and labelled with the calcium sensitive fluorescence dye Fluo4-AM in a culture medium. The potential modulators, e.g. the test compound, are added to the control cell line and to the cell line expressing the sweet receptor hT1R2/hT1R3, respectively.

Response to different concentrations of the modulator in the presence of fructose is recorded as Fluo4-AM fluorescence increase initiated through the hT1R2/hT1R3 dependent increase of the second messenger calcium. The applied fructose concentration is chosen from the results of preexaminations showing that fructose, in these concentrations, is barely activating the sweet taste receptors within this cell based assay. Thus a sweetness enhancing property of a test compound is detectable in the presence of the sweetener fructose.

### 1.2 Preparation of the cell lines and cell culture

A stable cell line based on HEK293 was termed HEKa15#17 served as control for functional Gα-protein and a stable cell line HEKGα15#17R2R3b#8 C6 served as cell line expressing the sweet receptor hT1R2/hT1R3 based on HEKGα15#17.

The cells were cultured in DMEM/HG and 10% FCS Gold, 4mM L-Glutamin, 1,3mg/ml Geneticin (HEKGα15#17) or the same medium additionally containing 6µg/ml Blasticidin (HEKGα15#17R2R3b#8 C6). The medium for the assay was DMEM/HG (high glucose, 4.5 g/l glucose, Life Technologies) and 10% FCS Gold, 4mM L-Glutamin (HEKGa15#17) or DMEM/LG (low glucose, 1 g/l glucose; Life Technologies) and 10% FCS Gold (HEKGα15#17R2R3b#8C6), respectively.

### 1.3 Evaluation of the sweet receptor modulating activity of deoxycholic acid

In order to evaluate the sweet receptor modulating activity of deoxycholic acid, deoxycholic acid was added to the cultures in a concentration of 10µM in a volume of 50µl. Controls were KH-buffer (Krebs HEPES-buffer: 118mM NaCl, 4.7mM KCl, 1.2mM MgSO₄, 1.2mM KH₂PO₄, 4.2mM NaHCO₃, 1.3mM CaCl₂, 10mM Hepes, pH 7.4) either without or with sweetness enhancer. As natural and artificial sweeteners either fructose (20mM), acesulfam K (30mM) or sodium cyclamate (30mM) were used.

Further controls for function of G-protein and receptor were isoproterenol (1µM, Sigma Aldrich), ionomycin (1µM, Calbiochem) and ATP (1µM, Applichem).

DMSO was diluted in KH-buffer/fructose (100mM stock solution = 50µM final test concentration = 1:400 dilution).

### 1.4 In vitro cell based assay procedure

For measurement of human T1R2/T1R3 taste receptor dependent activity, on day 1 of the test procedure the HEKα15#17 cells (control cell line without sweet receptor) and the HEKGa15#17R2R3b#8 C6 cells (cell line expressing the sweet receptor hT1R2/hT1R3), respectively, were transferred to low-glucose medium.

On day 2 the cells were seeded into assay plates at a density of 25.000 cells/well. Assay plates for fluorescence measurement (black clear bottom 96-cavity plates, Greiner Bio-One) were coated with poly-D-lysine. For direct comparison both cell lines (control cell line without sweet receptor and cell line expressing the sweet receptor hT1R2/hT1R3) were seeded into different cavities of the same assay plate. The plate was placed into the incubator for 48 hours at 37°C, 5% CO₂, 100% relative humidity.

On day 4 the calcium assay was performed. For this assay, the cells were marked with Fluo4-AM in medium and KH-buffer. To each cavity 100µl KH-Puffer/250µM sulfinpyrazone/4µM Fluo4-AM were added gently to 100µl medium (final concentration of Fluo4-AM = 2µM, stock solution of Fluo4-AM 1mM in DMSO, excitation at 485 nm, emission at 520 nm, Fisher Scientific, 58239 Schwerte, Germany).

The plate was placed into the incubator for 1 hour. In the mean time the test substances ("ligands") were prepared in a separate plate (5 times concentrated, 150 µl/cavity, and then automatically 50µl/cavity were transferred into the screening cell plate by pipetting robot (FLEX-station, Molecular Devices, Sunnyvale, California).

The culture medium was carefully removed and 200µl KH-buffer/250µM sulfinpyrazone per cavity was added slowly. Cells were left in the FLEX-station for 20 minutes for adaptation, followed by measurement at 37°C.

### 1.5 Results of the in vitro cell based assay

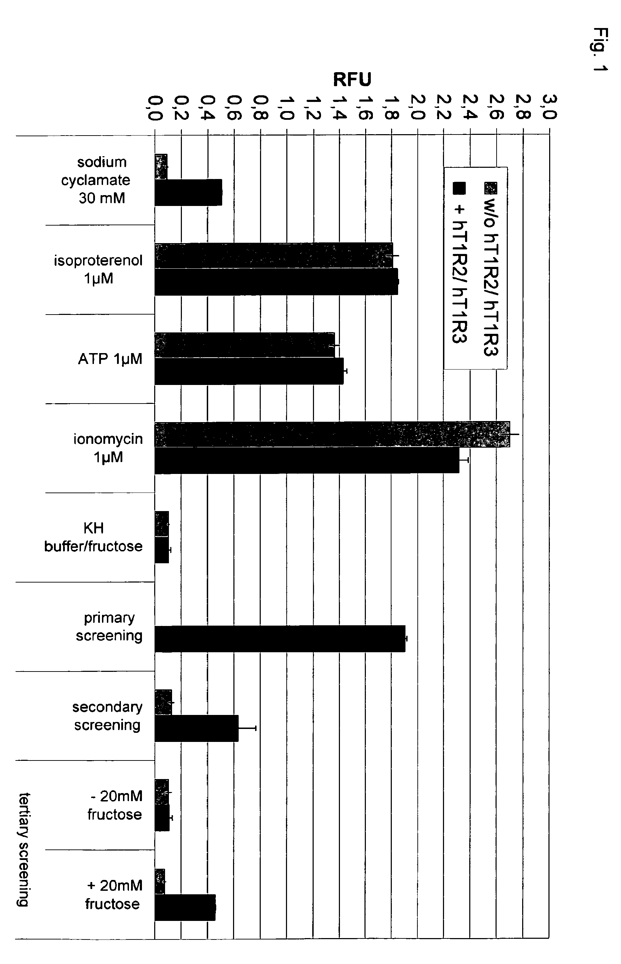

The results of this assay are shown in the bar diagram of Figure 1. In the bar diagram the grey bars (control--without hT1R2/hT1R3) indicate the measured Fluo4-AM fluorescence increase of the respective test compound added to the control cell line, the black bars (assay--with hT1R2/hT1R3) indicate the measured Fluo4-AM fluorescence increase of the respective test compound added to the cell line expressing the sweet receptor hT1R2/hT1R3.

The first bar (sodium cyclamate) shows that the control sweetener sodium cyclamate does not activate the control cell line, but activates the cell line expressing the sweet receptor hT1R2/hT1R3. Consequently, this bar shows that sodium cyclamate is a sweetener.

The second, third and fourth bars (isoproterenol, ATP and ionomycin) show that the respective control compounds activate both the control and the cell line expressing the sweet receptor hT1R2/hT1R3 and confirm the function of the G-protein and receptor.

The fifth bar (KH buffer/fructose) represents the result of a screening, in which fructose was added in a concentration in that it does neither activate the control cell line, nor the cell line expressing the sweet receptor hT1R2/hT1R3.

The sixth bar represents the result of the primary screening which was carried out with receptor carrying cells only and shows a strong cellular activation. The seventh bar (secondary screening) shows that deoxycholic acid in the presence of fructose does not activate the control cell line but activates the cell line expressing the sweet receptor hT1R2/hT1R3. Consequently, deoxycholic acid is a sweetener and/or a fructose enhancer.

The eighth bar (deoxycholic acid without fructose) shows that deoxycholic acid neither activates the control cell line nor the cell line expressing the sweet receptor hT1R2/hT1R3 showing that deoxycholic acid does not act as a sweetener in vitro.

The ninth bar (deoxycholic acid in the presence of fructose) shows that deoxycholic acid does not activate the control cell line, but activates the cell line expressing the sweet receptor hT1R2/hT1R3 and enhances the activity of fructose. Consequently, deoxycholic acid acts as a sweetness enhancer.

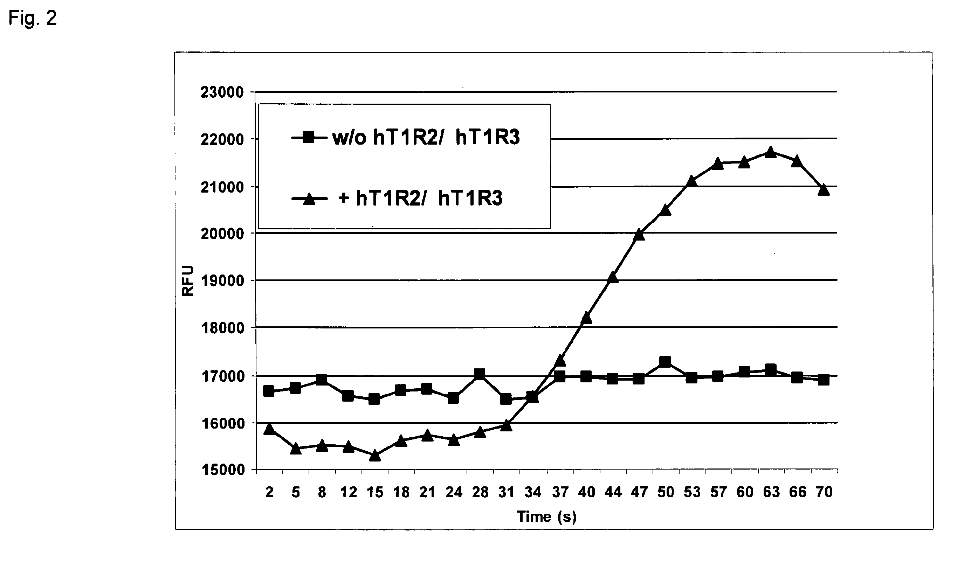

Figure 2 shows that the selective stimulation of receptor carrying cells by deoxycholic acid is verified by measuring the time response in the cell assay over a period of ca. 1 minute (70 seconds).

Consequently, the assay shows that deoxycholic acid acts as a fructose enhancer in the cell based *in vitro* assay at the indicated concentrations.

### Example 2: Taste and spit assay with deoxycholic acid

The taste of a sample of deoxycholic acid with regard to sweetness and fructose enhancing features was assessed by using a panel of trained sensory evaluators experienced in the sweet taste estimation procedure. 7 individuals were asked to taste the quality of single samples of 8 ml volume.

### 2.1 General procedure

Panelists were asked to take a sample of the liquid to be assessed (32µM test substance deoxycholic acid in 0.5 % ethanol) into the mouth and after some time allowed for taste perception to spit the sample out completely. Subsequently, the panelists were asked to rinse their mouth well with water or black tea to reduce any potential carry over effects. The tasting of a sample could be repeated if required.

### 2.2 Taste and spit phase I - Qualitative Assessment

In a first descriptive test 7 individuals were asked to taste the quality of single samples of 8 ml volume (maximum 3 subsequent samples). The samples were served at ambient temperature. The individuals of the taste panel were asked to answer the following questions with regard to the quality of taste: 1) does the sample taste sweet?, 2) is there another taste detectable (bitter, sour, salty, umami)?, 3) is there an off- or aftertaste?, 4) is there anything else remarkable about the perception of the sample?

**Results:** All panelists identified the sample containing deoxycholic acid as having no characteristic taste at the tested concentration.

### 2.3 Taste and spit phase II - Assessment of fructose enhancing features

In the next step the panelists were asked to answer questions in two pairwise comparison tests to determine the enhancement of sweet taste of the test substance with fructose relative to fructose only. 7 individuals were given samples of 8 ml volume. This time two samples were prepared for direct comparison regarding sweetness. One sample contained fructose (1 %) in solvent (0.5 % ethanol) and the other sample additionally contained 32µM of the test substance deoxycholic acid. Designation of the samples with A and B was randomized and decoded after the taste procedure. The questions to be answered were: 1) does one sample taste sweeter than the other?, 2) if so, which one?, 3) are there any other differences in the taste between the two samples?

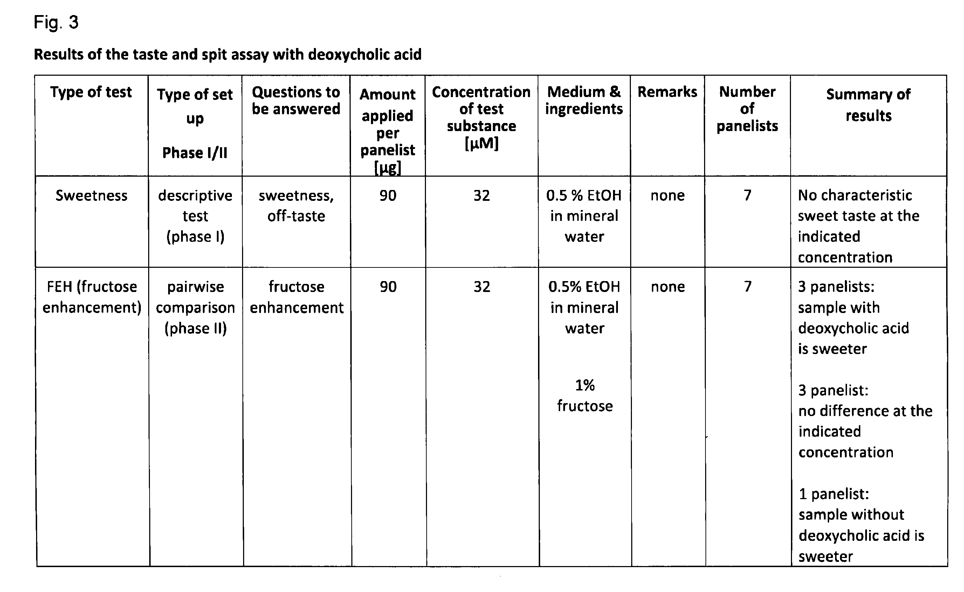

**Results:** The results of the taste and spit assay are based on a qualitative evaluation of the differences between the two samples (cf. Fig. 3). In the assessment of fructose enhancing features at a concentration of 32 µM deoxycholic acid, three panelists identified the sample containing 1% fructose with deoxycholic acid as sweeter than the sample containing 1% fructose only. Three panelists tasted no difference at the indicated concentration. One panelist described the sample containing 1% fructose only (the sample without deoxycholic acid) as sweeter than the sample containing 1% fructose with deoxycholic acid. The table in Fig. 3 summarizes the results showing that deoxycholic acid is perceived as a fructose enhancer at the indicated concentration.

The following items are also subject of the present invention:
1. A sweetener composition, comprising
   a sweetener; and
   deoxycholic acid or a derivative or a stereoisomer or a salt or a hydrate thereof.
2. The sweetener composition of item 1, wherein 1 gram of the sweetener composition has a sweetness comparable to from one to three teaspoons of granulated sugar.
3. The sweetener composition of item 1, wherein 1 gram of the sweetener composition contains less calories and carbohydrates than about 1 gram of granulated sugar.
4. The sweetener composition of item 1, wherein the sweetener composition is a liquid at ambient conditions.
5. The sweetener composition of item 1, wherein the sweetener composition is a solid at ambient conditions.
6. The sweetener composition of item 1, wherein the sweetener composition comprises homogeneous particles comprising the sweetener and deoxycholic acid or a derivative or a stereoisomer or a salt or a hydrate thereof.
7. The sweetener composition of item 6, wherein the sweetener particles have an average particle size of between about 50 microns and about 1250 microns.
8. The sweetener composition of item 1, wherein the sweetener composition comprises a mixture of first particles comprising the sweetener and second particles comprising deoxycholic acid or a derivative or a stereoisomer or a salt or a hydrate thereof.
9. The sweetener composition of item 1, comprising from 0.0005 wt% to 1.0 wt% of deoxycholic acid or a derivative or a stereoisomer or a salt or a hydrate thereof based on the total weight of the sweetener composition.
10. The sweetener composition of item 1, comprising from 3 wt% to 20 wt% of the sweetener, based on the total weight of the sweetener composition.
11. The sweetener composition of item 1, wherein the sweetener is selected from the group consisting of abiziasaponin, abrusosides, abrusoside A, abrusoside B, abrusoside C, abrusoside D, acesulfame potassium, advantame, albiziasaponin, alitame, aspartame, superaspartame, bayunosides, bayunoside 1, bayunoside 2, brazzein, bryoside, bryonoside, bryonodulcoside, carnosifloside, carrelame, curculin, cyanin, chlorogenic acid, cyclamates and salts thereof, cyclocaryoside I, dihydroquercetin-3-acetate, dihydroflavenol, dulcoside, gaudichaudioside, glycyrrhizin, glycyrrhetin acid, gypenoside, hematoxylin, isomogrosides, iso-mogroside V, lugduname, magap, mabinlins, micraculin, mogrosides (lo han guo), mogroside IV and mogroside V, monatin and its derivatives, monellin, mukurozioside, naringin dihydrochalcone (NarDHC), neohesperidin dihydrochalcone (NDHC), neotame, osladin, pentadin, periandrin I-V, perillartine, D-phenylalanine, phlomisosides, phlomisoside 1, phlomisoside 2, phlomisoside 3, phlomisoside 4, phloridzin, phyllodulcin, polpodiosides, polypodoside A, pterocaryosides, rebaudiosides, rebaudioside A, rebaudioside B, rebaudioside C, rebaudioside D, rebaudioside F, rebaudioside G, rebaudioside H), rubusosides, saccharin and salts and derivatives thereof, scandenoside, selligueanin A, siamenosides, siamenoside I, stevia, steviolbioside, stevioside and other steviol glycosides, strogines, strogin 1, strogin 2, strogin 4, suavioside A, suavioside B, suavioside G, suavioside H, suavioside I, suavioside J, sucralose, sucronate, sucrooctate, talin, telosmoside A₁₅, thaumatin, thaumatin I and II, trans-anethol, trans-cinnamaldehyde, trilobatin, D-tryptophane, erythritol, galactitol, hydrogenated starch syrups, maltitol and sorbitol syrups, inositols, isomalt, lactitol, maltitol, mannitol, xylitol, arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, tagatose, trehalose and xylose.
12. The sweetener composition of item 1, wherein the sweetener is fructose.
13. The sweetener composition of item 1, wherein the sweetener composition comprises a first sweetener and a second sweetener.
14. The sweetener composition of item 13, wherein the first sweetener is fructose.
15. The sweetener composition of item 1, wherein the sweetener is an artificial sweetener.
16. The sweetener composition of item 1, wherein the sweetener is a natural sweetener.
17. A tabletop sweetener composition, comprising:
   (a) at least one sugar sweetener;
   (b) at least one sugar alcohol or polyol;
   (c) deoxycholic acid or a derivative or a stereoisomer or a salt or a hydrate thereof; and
   (d) cellulose.
18. A tabletop sweetener composition according to item 17, wherein the at least one sugar sweetener is selected from the group consisting of sucrose, lactose, maltose, trehalose, and isomaltulose.
19. A tabletop sweetener composition according to item 17, wherein the tabletop sweetener composition comprises from about 40 % by weight to about 70 % by weight sugar alcohol.
20. A tabletop sweetener composition according to item 17, wherein the tabletop sweetener composition comprises from about 27 % by weight to about 50 % by weight sugar sweetener.
21. A tabletop sweetener composition according to item 17, wherein the tabletop sweetener composition comprises from about 0.5 % by weight to about 7.0 % by weight of deoxycholic acid or a derivative or a stereoisomer or a salt or a hydrate thereof.
22. A tabletop sweetener composition according to item 17, wherein the tabletop sweetener composition comprises from about 0.4 % by weight to about 3.0 % by weight cellulose.
23. A tabletop sweetener composition according to item 17, further comprising a sweetness modifier.
24. A tabletop sweetener composition according to item 17, further comprising a mouthfeel enhancer.
25. A tabletop sweetener composition according to item 17, further comprising a flavoring.
26. A tabletop sweetener composition according to item 17, in the form of tabletop sweetener particles.
27. A tabletop sweetener composition according to item 26, wherein the tabletop sweetener particles have an average particle size of between about 50 microns and about 1250 microns.
28. A tabletop sweetener composition according to item 17, wherein the tabletop sweetener composition has less than about 5 calories per gram.
29. A tabletop sweetener composition, comprising:
   (a) a plurality of first sweetener particles, wherein the first sweetener particles have (i) a sugar alcohol core, (ii) a first sugar alcohol core-coating layer comprising deoxycholic acid or a derivative or a stereoisomer or a salt or a hydrate thereof and cellulose, and (iii) a second sugar alcohol core-coating layer comprising a sugar sweetener where the second sugar alcohol core-coating layer is disposed over the first sugar alcohol core-coating layer; and
   (b) a plurality of second sweetener particles, where the second sweetener particle has (i) a sugar sweetener core, (ii) a first sugar sweetener core-coating layer comprising deoxycholic acid or a derivative or a stereoisomer or a salt or a hydrate thereof and cellulose, and (iii) a second sugar sweetener core-coating layer comprising a disaccharide, where the second sugar sweetener core-coating layer is disposed over the first disaccharide core-coating layer.
30. A tabletop sweetener composition according to item 29, wherein the disaccharide core comprises isomaltulose.
31. A tabletop sweetener composition according to item 29, wherein the second erythritol core-coating layer comprises isomaltulose.
32. A tabletop sweetener composition according to item 29, wherein the second disaccharide core-coating layer comprises isomaltulose.
33. A tabletop sweetener composition according to item 29, wherein the first sugar alcohol core-coating layer and the first sugar sweetener core-coating layer further comprise a flavoring.
34. A tabletop sweetener composition according to item 29, wherein the first sugar alcohol core-coating layer and the first sugar sweetener core-coating layer further comprise a mouthfeel enhancer.
35. A tabletop sweetener composition according to item 29, wherein the first sugar alcohol core-coating layer and the first sugar sweetener core-coating layer further comprise a sweetness modifier.
36. A tabletop sweetener composition according to item 29, wherein the plurality of first sweetener particles and the plurality of second sweetener particles have an average particle size between about 50 microns and about 1250 microns.
37. A method of providing a sweetened consumable comprising the step of admixing with a consumable product a tabletop sweetener composition comprising:
   (i) at least one sugar sweetener;
   (ii) at least one sugar alcohol or polyol;
   (iii) deoxycholic acid or a derivative or a stereoisomer or a salt or a hydrate thereof; and
   (iv) cellulose.
38. A method of enhancing the taste sensations associated with flavor ingredients, comprising the step of admixing deoxycholic acid or a derivative or a stereoisomer or a salt or a hydrate thereof with one or more flavor ingredients to provide a flavor-enhanced composition or consumable product.
39. The method of item 38, wherein the flavor ingredient is a sweetener.
40. The method of item 39, wherein the sweetener is selected from the group consisting of abiziasaponin, abrusosides, abrusoside A, abrusoside B, abrusoside C, abrusoside D, acesulfame potassium, advantame, albiziasaponin, alitame, aspartame, superaspartame, bayunosides, bayunoside 1, bayunoside 2, brazzein, bryoside, bryonoside, bryonodulcoside, carnosifloside, carrelame, curculin, cyanin, chlorogenic acid, cyclamates and salts thereof, cyclocaryoside I, dihydroquercetin-3-acetate, dihydroflavenol, dulcoside, gaudichaudioside, glycyrrhizin, glycyrrhetin acid, gypenoside, hematoxylin, isomogrosides, iso-mogroside V, lugduname, magap, mabinlins, micraculin, mogrosides (lo han guo), mogroside IV and mogroside V, monatin and its derivatives, monellin, mukurozioside, naringin dihydrochalcone (NarDHC), neohesperidin dihydrochalcone (NDHC), neotame, osladin, pentadin, periandrin I-V, perillartine, D-phenylalanine, phlomisosides, phlomisoside 1, phlomisoside 2, phlomisoside 3, phlomisoside 4, phloridzin, phyllodulcin, polpodiosides, polypodoside A, pterocaryosides, rebaudiosides, rebaudioside A, rebaudioside B, rebaudioside C, rebaudioside D, rebaudioside F, rebaudioside G, rebaudioside H), rubusosides, saccharin and salts and derivatives thereof, scandenoside, selligueanin A, siamenosides, siamenoside I, stevia, steviolbioside, stevioside and other steviol glycosides, strogines, strogin 1, strogin 2, strogin 4, suavioside A, suavioside B, suavioside G, suavioside H, suavioside I, suavioside J, sucralose, sucronate, sucrooctate, talin, telosmoside A₁₅, thaumatin, thaumatin I and II, trans-anethol, trans-cinnamaldehyde, trilobatin, D-tryptophane, erythritol, galactitol, hydrogenated starch syrups, maltitol and sorbitol syrups, inositols, isomalt, lactitol, maltitol, mannitol, xylitol, arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, tagatose, trehalose and xylose.
41. A process for enhancing the sweetness of a sweetener composition comprising a sweetener, comprising the step of:
   (a) adding to the sweetener deoxycholic acid or a derivative or a stereoisomer or a salt or a hydrate thereof to form an enhanced sweetener composition.
42. The process of item 41, wherein the adding comprises adding to the sweetener a deoxycholic acid or a derivative or a stereoisomer or a salt or a hydrate thereof in an amount effective to increase the sweetness of the sweetener composition to an increased sweetness level.
43. A consumable product composition, comprising:
   a consumable product;
   a sweetener; and
   deoxycholic acid or a derivative or a stereoisomer or a salt or a hydrate thereof present in an amount effective to increase a sweetness level of the composition.
44. The consumable product composition of item 43, wherein deoxycholic acid or a derivative or a stereoisomer or a salt or a hydrate thereof is present in the consumable product composition in a concentration from 0.1 wppm to 100 wppm.
45. The consumable product composition of item 44, wherein the consumable product is a water-based consumable product selected from the group consisting of beverages, water, aqueous beverages, enhanced/slightly sweetened water drinks, flavored carbonated and still mineral and table water, non-carbonated beverages, carbonated waters, still waters, soft drinks, non-alcoholic drinks, alcoholic drinks, beer, wine, liquor, fruit drinks, juices, fruit juices, vegetable juices, broth drinks, coffees, teas, black teas, green teas, oolong teas, herbal infusion, cacoa, tea-based drinks, coffee-based drinks, cacao-based drinks, dessert, syrups, frozen fruits, frozen fruit juices, water-based ices, fruit ices, sorbets, dressings, salad dressings, jams, marmalades, canned fruit, savoury, delicatessen products, delicatessen salads, sauces, ketchup, mustard, pickles, marinated fish, sauces, soups, beverage botanical materials, and instant powders for reconstitution.
46. The consumable product composition of item 44, wherein the consumable product is a solid dry consumable product selected from the group consisting of cereals, baked food products, biscuits, breads, breakfast cereals, cereal bars, energy bars, nutritional bars, granolas, cakes, rice cakes, cookies, crackers, donuts, muffins, pastries, confection, chewing gums, chocolate products, chocolates, fondants, candies, hard candies, marshmallows, pressed tablets, snack foods, botanical materials, and instant powders for reconstitution.

## Claims

1. Use of deoxycholic acid or a derivative or a stereoisomer or a salt or a hydrate thereof as a sweetness enhancer.

2. Sweetener composition comprising
(a) a sweetener; and
(b) deoxycholic acid or a derivative or a stereoisomer or a salt or a hydrate thereof.

3. The sweetener composition according to claim 2, wherein deoxycholic acid or a derivative or a stereoisomer or a salt or a hydrate thereof is a sweetness enhancer.

4. The sweetener composition according to claim 2 or 3, wherein the sweetener is selected from the group consisting of abiziasaponin, abrusosides, in particular abrusoside A, abrusoside B, abrusoside C, abrusoside D, acesulfame potassium, advantame, albiziasaponin, alitame, aspartame, superaspartame, bayunosides, in particular bayunoside 1, bayunoside 2, brazzein, bryoside, bryonoside, bryonodulcoside, carnosifloside, carrelame, curculin, cyanin, chlorogenic acid, cyclamates and its salts, cyclocaryoside I, dihydroquercetin-3-acetate, dihydroflavenol, dulcoside, gaudichaudioside, glycyrrhizin, glycyrrhetin acid, gypenoside, hematoxylin, isomogrosides, in particular iso-mogroside V, lugduname, magap, mabinlins, micraculin, mogrosides (lo han guo), in particular mogroside IV and mogroside V, monatin and its derivatives, monellin, mukurozioside, naringin dihydrochalcone (NarDHC), neohesperidin dihydrochalcone (NDHC), neotame, osladin, pentadin, periandrin I-V, perillartine, D-phenylalanine, phlomisosides, in particular phlomisoside 1, phlomisoside 2, phlomisoside 3, phlomisoside 4, phloridzin, phyllodulcin, polpodiosides, polypodoside A, pterocaryosides, rebaudiosides, in particular rebaudioside A, rebaudioside B, rebaudioside C, rebaudioside D, rebaudioside F, rebaudioside G, rebaudioside H), rubusosides, saccharin and its salts and derivatives, scandenoside, selligueanin A, siamenosides, in particular siamenoside I, stevia, steviolbioside, stevioside and other steviol glycosides, strogines, in particular strogin 1, strogin 2, strogin 4, suavioside A, suavioside B, suavioside G, suavioside H, suavioside I, suavioside J, sucralose, sucronate, sucrooctate, talin, telosmoside A₁₅, thaumatin, in particular thaumatin I and II, trans-anethol, trans-cinnamaldehyde, trilobatin, D-tryptophane, erythritol, galactitol, hydrogenated starch syrups including maltitol and sorbitol syrups, inositols, isomalt, lactitol, maltitol, mannitol, xylitol, arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, tagatose, trehalose and xylose.

5. The sweetener composition according to any one of claims 2 to 4, wherein the composition further comprises at least one ingredient selected from bulking agents, carriers, fibers, sugar alcohols, flavorings, flavor enhancers, flavor stabilizers, acidulants, anti-caking and free-flow agents.

6. Tabletop sweetener composition comprising
(a) at least one sugar sweetener, which is selected from the group consisting of monosaccharides, disaccharides, oligosaccharides and polysaccharides, preferably the at least one sugar sweetener is selected from the group consisting of arabinose, dextrin, dextrose, fructose, high fructose corn syrup, fructooligosaccharides, fructooligosaccharide syrups, galactose, galactooligosaccharides, glucose, glucose and (hydrogenated) starch syrups/hydrolysates, isomaltulose, lactose, hydrolysed lactose, maltose, mannose, rhamnose, ribose, sucrose, stachyose, tagatose, trehalose, xylose, and combinations thereof, most preferably the at least one sugar sweetener is a disaccharide and/or fructose;
(b) at least one sugar alcohol (or polyol), which is selected from the group consisting of erythritol, galactitol, hydrogenated starch syrups including maltitol and sorbitol syrups, inositols, isomalt, lactitol, maltitol, mannitol, xylitol, and combinations thereof, preferably the at least one sugar alcohol is erythritol;
(c) deoxycholic acid or a derivative or a stereoisomer or a salt or a hydrate thereof and
(d) a taste-improving amount of cellulose.

7. The tabletop sweetener composition according to claim 6, wherein the disaccharide is selected from the group consisting of sucrose, lactose, maltose, trehalose, and isomaltulose.

8. The tabletop sweetener composition according to claim 6 or 7, further comprising a sweetness modifier and/or a mouthfeel enhancer and/or a flavoring.

9. The tabletop sweetener composition according to any one of claims 6 to 8, wherein the tabletop sweetener composition substantially comprises sweetener particles.

10. Consumable comprising
(a) a consumable product; and
(b) a sweetener composition as defined in any one of claims 2 to 5.

11. Consumable comprising
(a) a consumable product; and
(b) a tabletop sweetener composition as defined in any one of claims 6 to 9.

12. The consumable according to claim 10 or 11, wherein the consumable product is selected from water-based consumables, solid dry consumables, dairy products, dairy-derived products and dairy-alternative products.

13. The consumable according to any one of claims 10 to 12, wherein the consumable product is a water-based consumable product selected from the group consisting of beverage, water, aqueous beverage, enhanced/slightly sweetened water drink, flavored carbonated and still mineral and table water, non-carbonated beverage, carbonated water, still water, soft drink, non-alcoholic drink, alcoholic drink, beer, wine, liquor, fruit drink, juice, fruit juice, vegetable juice, broth drink, coffee, tea, black tea, green tea, oolong tea, herbal infusion, cacoa (water-based), tea-based drink, coffee-based drinks, cacao-based drink, dessert, syrup, frozen fruit, frozen fruit juice, water-based ice, fruit ice, sorbet, dressing, salad dressing, jams, marmalades, canned fruit, savoury, delicatessen products like delicatessen salads, sauces, ketchup, mustard, pickles and marinated fish, sauce, soup, and beverage botanical materials (whole or ground), or instant powder for reconstitution (coffee beans, ground coffee, instant coffee, cacao beans, cacao powder, instant cacao, tea leaves, instant tea powder).

14. The consumable according to any one of claims 10 to 12, wherein the consumable product is a solid dry consumable product selected from the group consisting of cereals, baked food products, biscuits, bread, breakfast cereal, cereal bar, energy bars/nutritional bars, granola, cakes, rice cakes, cookies, crackers, donuts, muffins, pastries, confectioneries, chewing gum, chocolate products, chocolates, fondant, candy, hard candy, marshmallow, pressed tablets, snack foods, botanical materials (whole or ground), and instant powders for reconstitution.

15. The consumable according to any one of claims 10 to 12, wherein the consumable product is a dairy product, dairy-derived product and/or dairy-alternative product selected from the group consisting of milk, fluid milk, cultured milk product, cultured and noncultured dairy-based drink, cultured milk product cultured with lactobacillus, yoghurt, yoghurt-based beverage, smoothy, lassi, milk shake, acidified milk, acidified milk beverage, butter milk, kefir, milk-based beverages, milk/juice blend, fermented milk beverage, icecream, dessert, sour cream, dip, salad dressing, cottage cheese, frozen yoghurt, soy milk, rice milk, soy drink, and rice milk drink.

16. The consumable according to any one of claims 10 to 12, wherein the consumable product is a carbonated drink or a non-carbonated drink or a cereal or yoghurt or a chewing-gum.

17. The consumable according to claim 10, wherein the consumable product is a dental product selected from the group consisting of toothpaste, dental floss, mouthwash, denture adhesive, enamel whitener, fluoride treatments and oral care gels, preferably toothpaste.

18. The consumable according to claim 10, wherein the consumable product is a cosmetic product selected from the group consisting of lipstick, lip balm, lip gloss and petroleum jelly.

19. The consumable according to claim 10, wherein the consumable product is a pharmaceutical product selected from the group consisting of over-the-counter and prescription drugs, non-tobacco snuff, tobacco substitutes, chewable medications, cough syrups, throat sprays, throat lozenges, cough drops, antibacterial products, pill coatings, gel caplets, soluble fiber preparations, antacids, tablet cores, rapidly absorbed liquid compositions, stable foam compositions, rapidly disintegrating pharmaceutical dosage forms, beverage concentrates for medicinal purposes, aqueous pharmaceutical suspensions, liquid concentrate compositions, and stabilized sorbic acid solutions, phosphate buffers, saline solutions, emulsion, non-aqueous pharmaceutical solvents, aqueous pharmaceutical carriers, solid pharmaceutical carrier, and pharmaceutical preservatives/additives (antimicrobials, antioxidants, chelating agents, inert gases, flavoring agents, coloring agents).

20. The consumable according to claim 10, wherein the consumable product is an animal feed or animal food.
